# EUROPÄISCHE PATENTANMELDUNG

(11) **EP 2 511 658 A1**
(43) Veröffentlichungstag der Anmeldung: **17.10.2012**
(21) Anmeldenummer: 11162505.9
(22) Anmeldetag: 14.04.2011
(51) Int. Cl.: G01C 15/00, G01S 19/51, G01S 19/10

(54) **Vermessungssystem und Verfahren zur Neupunktbestimmung**

(71) Anmelder: Hexagon Technology Center GmbH, 9435 Heerbrugg (CH)
(72) Erfinder: Metzler, Bernhard, A-6850, Dornbirn (AT)
(74) Vertreter: Kaminski Harmann

(57) **Zusammenfassung**

Die Erfindung betrifft ein geodätisches Vermessungssystem 1 mit mindestens einer einen Referenzpunkt definierende Referenzkomponente, wobei eine absolute Position des Referenzpunkts bekannt ist, und mindestens einer eine relative Neupunktposition 2 ableitende Neupunktbestimmungskomponente 31. Weiters ist eine gegenseitige relative Referenzinformation zwischen der Referenzkomponente und der Neupunktbestimmungskomponente ableitbar, insbesondere zum Zwecke einer Referenzierung gegenüber der Referenzpunktposition. Das Vermessungssystem 1 weist zudem ein auto-mobiles, unbemanntes, steuerbares Fluggerät auf, wobei das Fluggerät 50 die Referenzkomponente trägt, durch die der mindestens eine Referenzpunkt als mobiler Referenzpunkt bereitgestellt wird. Ferner ist das Fluggerät 50 derart ausgebildet, dass die Referenzkomponente durch das Fluggerät 50 räumlich frei versetzbar, insbesondere im Wesentlichen positionsfest positionierbar, ist.

## Beschreibung

Die Erfindung betrifft ein Vermessungssystem mit einem unbemannten, steuerbaren, auto-mobilen Fluggerät nach dem Oberbegriff des Anspruchs 1, ein Verfahren zum Positionsreferenzieren nach Anspruch 8 und ein Fluggerät nach Anspruch 14 zur Verwendung in einem erfindungsgemässen System.

Zum Vermessen eines oder insbesondere mehrerer Zielpunkte sind seit der Antike zahlreiche geodätische Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung gegebenenfalls noch mit einem äusseren Bezugssystem verknüpft werden.

In vielen geodätischen Anwendungen erfolgt eine Vermessung von Punkten, indem speziell ausgestaltete Zielobjekte platziert werden. Diese bestehen meist aus einem Lotstock mit einem anzielbaren Modul z.B. einem Reflektor zur Definition der Messtrecke bzw. des Messpunktes. Diese Zielobjekte werden mittels eines Vermessungsgeräts angezielt, eine Richtung und eine Distanz zu den Objekten bestimmt und eine Position der Objekte abgeleitet.

In Analogie zu dieser Punktvermessung kann eine Markierung bereits bekannter Zielpunkte bzw. von Punkten, deren Position im Vorfeld eines Markiervorgangs definiert wurde, erfolgen. Im Gegensatz zur Punktvermessung sind in diesem Fall die Position bzw. die Koordinaten der zu markierenden Punkte bekannt und sollen markiert werden. Für einen solchen Markiervorgang wird üblicherweise ebenfalls ein Lotstock bzw. eine Vermessungsstange verwendet, die von einem Benutzer geführt und auf einem Zielpunkt positioniert wird. Der Benutzer kann sich hierfür auf Basis von durch das Vermessungsgerät generierten Positionsinformationen an die Zielposition des Zielpunktes herantasten, wobei der Vermessungsstab von dem Vermessungsgerät durch eine zweite Person oder durch einen dem Vermessungsgerät zugeordneten Automatismus automatisch angezielt werden kann. Ist der Zielpunkt erreicht, kann der Benutzer eine Markierung des Punktes vornehmen.

Moderne Vermessungsgeräte wie eine Totalstation für derartige Markier- und Vermessungsaufgaben verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Zieloptik, zur reflektorlosen Streckenmessung, zur automatischen Zielsuche und -verfolgung und zur Fernsteuerung des gesamten Geräts integriert.

Aus dem Stand der Technik bekannte Totalstationen verfügen des Weiteren über eine Funkdatenschnittstelle zum Aufbau einer Funkverbindung zu externen Peripheriekomponenten wie z.B. zu einem Datenerfassungsgerät, welches insbesondere als handhaltbarer Datenlogger, Fernbedieneinheit, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Zum Anvisieren bzw. Anzielen des zu vermessenden Zielpunkts weisen gattungsgemässe geodätische Vermessungsgeräte beispielsweise ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers oder der Fernbedieneinheit - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Automatische Fokussiereinrichtungen für Zielfernrohre geodätischer Geräte sind z.B. aus der DE 197 107 22, der DE 199 267 06 oder der DE 199 495 80 bekannt.

Den vorgenannten Vermessungssystemen und Anwendungen aus dem Stand der Technik ist gemeinsam, dass eine Position eines Vermessungsgeräts oder eines Vermessungsstabs eindeutig und mit geodätischer Genauigkeit zu bestimmen ist und diese Position zumindest in einem absoluten Koordinatensystem angegeben werden soll. Hierfür kann eine Transformation der jeweiligen gemessenen Positionsinformation aus einem inneren Messkoordinatensystem in das absolute, übergeordnete Koordinatensystem erfolgen.

Ein Positionsbestimmungsverfahren mit einer Koordinatentransformation für zu vermessende Punkte mit einem geodätischen Gerät wird beispielsweise in der US 2009/0082992 geoffenbart. Grundsätzlich kann dabei die eigene Position des geodätischen Geräts, d.h. die Stationskoordinaten des Messgerätes, oder die Position von zu vermessenden Neupunkten als sogenannte freie Stationierung aus Messungen zu bekannten, fixen Messpunkten als Bezugspunkte abgeleitet werden. Dieser Vorgang wird auch als Referenzieren der Messgeräteposition bzw. der Neupunkte gegenüber den eingemessenen und bekannt positionierten Bezugspunkten bezeichnet. Dazu wird zuerst die Position der bekannten Bezugspunkte relativ zum Standpunkt in einem lokalen Koordinatensystem berechnet. Mit Hilfe der bekannten Koordinaten der Bezugspunkte werden, wenn die notwendige Anzahl an Messungen vorliegt, ausgeglichene Transformationsparameter berechnet, woraus dann die gesuchten Stationskoordinaten bzw. die gesuchten Koordinaten der Neupunkte ableitbar sind.

Weiterhin kann eine Zieleinheit bzw. ein mit der Zieleinheit versehener Vermessungsstab von einer stationären Positionsbestimmungseinheit wie beispielsweise einer Totalstation anvisiert und eine automatisierte Führung eines Benutzers bzw. Operators zu einem vorgesehenen Zielpunkt, unter Verwendung von der stationären Positionsbestimmungseinheit aufgenommenen Bilddaten, erfolgen.

Hierfür wird in der US 7 222 021 bzw. der korrespondierenden EP 1 293 755 ein Vermessungssystem, in dieser Patentschrift bezeichnet als ein Bedienerleitsystem, vorgeschlagen mit einer stationären Messeinheit (Positionsbestimmungseinheit), welche ausgestattet ist mit Abbildungsmitteln wie z.B. einer Kamera, und einer mobilen Station mit der Funktion einer mobilen Zieleinheit, welche ausgestattet ist mit Anzeigemitteln wie z.B. einem Display zum Darstellen einer aktuellen Position des Benutzers basierend auf gespeicherten Landschaftsbildern bzw. -daten und aktuellen Bildern, von der stationären Messeinheit aus gesehen. Es wird des Weiteren offenbart, wie ein Bediener mittels Korrelation zwischen den aktuell von der stationären Messstation aus gemessenen Positionsdaten, einschliesslich Kamerabild, für die mobile Station, gespeicherten Daten mit der vorgesehenen Position des Zielpunkts durch Markierung auf dem Display der Zieleinheit zum Zielpunkt geleitet werden kann, z.B. durch Richtungsanzeige mittels eines Pfeils auf dem Display.

Ferner kann eine Positionierung oder ein Leiten eines Benutzers zu einer vorbekannten Zielposition anhand von GNSS-Signalen ohne die Verwendung eines Vermessungsgeräts erfolgen. Hierbei kann ein Vermessungsstab eine GNSS-Empfänger und eine Verarbeitungseinheit bzw. einen an den Vermessungsstab anbringbaren Controller zur Bestimmung von Positionskoordinaten aufweisen. Durch ein Vergleichen der bekannten Zielposition mit der jeweiligen durch die GNSS-Signale ermittelten Position kann so der Benutzer den Zielpunkt auffinden und eine allfällige Markierung dort vornehmen.

Ein weiteres Positionsbestimmungsverfahren zur Bestimmung einer Position eines optischen geodätischen Geräts ist aus der WO 2009/039929 bekannt. Hierbei erfolgt die Positionsbestimmung mit einer mobilen, mit einem GNSS-Empfänger ausgestatteten Einheit und einer Totalstation.

Dieses Verfahren ermöglicht eine Verknüpfung einer GNSS-Positionsbestimmung mit einer Positionsbestimmung anhand eines geodätischen Geräts sowie eine damit verbundene Nutzung jeweils der Vorteile beider Verfahren. Voraussetzung des Verfahrens ist, dass die bewegte Einheit, z.B. eine Arbeitsmaschine, eine Positionsbestimmungsvorrichtung wie einen GNSS-Empfänger aufweist, mit welchem mindestens zu einigen Zeitpunkten eine Positionsbestimmung möglich ist.

Vorteilhafterweise in Echtzeit werden dann für bekannte Zeitpunkte GNSS-Positionen als Referenzpositionen der sich fortbewegenden Arbeitsmaschine und Relativpositionen des der Arbeitsmaschine zugeordneten Bezugspunktes mittels der Totalstation bestimmt. Die GNSS-Positionen beziehen sich dabei auf ein äusseres und die Relativpositionen auf ein inneres, totalstationsbezogenes Koordinatensystem. Mindestens teilweise werden für gleiche oder zeitlich nah beieinander liegende Zeitpunkte sowohl eine GNSS-Position als auch eine Relativposition bestimmt, wobei die sich zeitlich entsprechenden Positionen jeweils paarweise einander zugeordnet werden und somit ein zeitlich korreliertes Positionspaar jeweils für einen oder zwei benachbarten Zeitpunkt bilden.

Aus den Korrelationen jeweils der einzelnen Paarungen kann nun eine ausgeglichene Beziehung zwischen äusserem und innerem Bezugssystem abgeleitet werden, wobei diese Beziehung insbesondere durch ausgeglichene Transformationsparameter dargestellt wird. Die abgeleitete ausgeglichene Beziehung gibt an, wie das äussere Bezugssystem mit dem inneren, totalstationsbezogenen Bezugssystem zusammenhängt. Anhand dieser Beziehung können nun zum Beispiel die Koordinaten der mit der Totalstation gemessenen Relativpositionen oder die Position der Totalstation selbst in das äussere Bezugssystem transformiert und zur Positionsbestimmung der Arbeitsmaschine im äusseren Bezugssystem verwendet werden.

Eine gemeinsame Voraussetzung für die Durchführung der oben genannten Verfahren zur Bestimmung von Positionen ist, dass eine Verbindung, z.B. zur Signalübermittlung, zwischen den jeweils zur Bestimmung verwendeten Komponenten vorhanden sein muss. Insbesondere muss für das Anmessen eines Zielpunkts bzw. eines an einem Vermessungsstab angeordneten Reflektors ein optischer Kontakt zwischen Vermessungsgerät und dem Reflektor vorhanden sein, d.h. ein Messstrahl direkt ohne Strahlunterbrechung auf ein entsprechendes Ziel ausgerichtet werden können. Analog dazu muss für eine Positionsbestimmung mittels GNSS-Signalen eine Verbindung zwischen einem GNSS-Empfänger und einer Anzahl von GNSS-Satelliten zur Übermittelung der Signale herstellbar sein. Somit ist jeweils eine Interaktion zwischen zumindest zwei Messkomponenten Grundlage einer zuverlässigen und ausführbaren Positionsbestimmung. Diese Voraussetzung bildet gleichzeitig einen gemeinsamen Nachteil der Methoden. Wird die für die Methode jeweils notwendige Verbindung bzw. Kontaktlinie in irgendeiner Art und Weise behindert oder unterbrochen, so kann eine Bestimmung der Position nicht erfolgen. Derartige Verbindungsbehinderungen können beispielsweise durch Gebäude, die sich in einer geraden Verbindungslinie befinden, oder zerklüftete Geländeformen verursacht sein und somit die Ausführung des Positionsbestimmungsverfahrens verhindern.

Es ist daher Aufgabe der vorliegenden Erfindung ein verbessertes Vermessungssystem mit zugehörigen Teilen sowie ein entsprechendes verbessertes Verfahren bereitzustellen, mit dem eine Positionsbestimmung bzw. eine Neupunktbestimmung ohne oder mit einer nicht ausreichenden Anzahl bekannter externer Referenzen exakt und mit einem hohen Automatisierungsgrad durchführbar ist.

Eine spezielle Aufgabe der Erfindung ist es, eine Neupunktposition in einem System zu referenzieren, obwohl vom Neupunkt zu nicht ausreichend vielen Referenzen in diesem System eine Sichtverbindung gegeben ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

In der Vermessungspraxis ist für eine Positionsbestimmung eine Sichtverbindung, d.h. eine Verbindung zweier Einheiten durch ein Signal oder eine optische Verbindung, von einem Messgerät, für welches die Position oder durch welches eine Position eines Neupunkts bestimmt werden soll, zu bekannten Referenzpunkten oder zu einem weitern Vermessungsgerät, dessen Position bekannt ist, erforderlich. In der Praxis kann diese Sichtverbindung verursacht durch Hindernisse, z.B. Gebäude, Bewuchs oder Geländeformen, unterbrochen oder behindert sein und eine Positionsbestimmung von Messgeräten oder Neupunkten damit oft nur durch erheblichen Mehraufwand oder gar nicht durchgeführt werden.

Mit GNSS-Messgeräten kann dann eine Positionsbestimmung nicht oder nicht in der geforderten Genauigkeit ermöglicht sein, wenn an einer Messgeräteposition z.B. aufgrund eines hohen Gebäudes die Signale von nicht ausreichend vielen Satelliten empfangen werden können. Unter ungünstigen Umständen kann dabei eine Messung zu drei oder vier koordinativ bekannten Punkten (Satelliten) nicht durchführbar sein. Im Fall von Theodoliten oder Totalstationen kann durch Hindernisse, wie z.B. Bauwerke oder Bäume, das für die Positionsbestimmung der Totalstation notwendige Anzielen von Referenzpunkten oder von weiteren Totalstationen unmöglich gemacht werden. Z.B können aufgrund der Hindernisse, so vom Theodoliten aus nicht mindestens drei koordinativ bekannte Punkte angezielt und entsprechende Richtungswinkel oder Entfernungen gemessen werden. Zudem kann es sich als nachteilig erweisen, dass eine Geometrie durch die Position der koordinativ bekannten Punkte und des GNSS-Messgeräts oder des Theodoliten vorgegeben ist, welche zu schlechten Schnittbedingungen, z.B. zu einem schleifenden Schnitt und somit zu einer höheren Unsicherheit in der Punktbestimmung, führt.

Bei einer derartigen Unterbrechung einer direkten Sichtverbindung zwischen Messgerät und Referenzpunkt kann erfindungsgemäss eine Überbrückung zur Erzeugung einer indirekten, mittelbaren Sichtverbindung durch ein Fluggerät bzw. durch eine von einem Fluggerät getragene Referenzkomponente erfolgen. Dadurch kann die Unterbrechung der Sichtverbindung aufgehoben bzw. überbrückt werden und eine Positionsbestimmung trotz der unterbrochenen direkten Sichtverbindung erfolgen.

Die Erfindung betrifft insbesondere eine Methode zur Bestimmung der Position eines Messgeräts oder eines Neupunkts und gegebenenfalls der Orientierung des Messgeräts basierend auf mobilen, eingeschalteten Referenzpunkten, welche durch ein Fluggerät erzeugt werden und so eine Sichtbrücke bzw. eine Übertragungsbrücke, zwischen dem Messgerät und einer eine Position der Referenzpunkte bestimmenden Einheit bilden. Eine Sichtbrücke im Sinne der Erfindung kann hierbei repräsentiert werden durch einen Punkt, welcher gleichzeitig von einem Messgerät, dessen Position bestimmt werden soll, und einer Positionsbestimmungseinheit, durch die die Position des Fluggeräts in einem absoluten Koordinatensystem bestimmt werden kann, sichtbar ist bzw. zu dem von beiden Einheiten gleichzeitig eine Verbindung herstellbar ist. Nach diesem Prinzip kann durch eine Referenzkomponente (Übertragungskomponente) am Fluggerät eine Übertragungsbrücke hergestellt werden, wobei die Referenzkomponente z.B. als Reflektor ausgebildet sein kann.

Ausgehend vom Messgerät, für das die Position bestimmt werden soll, können Winkelmessungen zu einem mobilen Referenzpunkt am Fluggerät und/oder Entfernungsmessungen zwischen dem Messgerät und dem Referenzpunkt zu einem bestimmten Zeitpunkt durchgeführt und damit relative Referenzinformationen erzeugt und im Vermessungssystem bereitgestellt werden. Dabei kann eine relative Referenzinformation, die ein relatives Positionsverhältnis des Messgeräts zum Fluggerät bzw. zur Referenzkomponente angibt, bestimmt werden, wobei zu einer Bestimmung einer absoluten Position, d.h. einer Position des Messgeräts in einem absoluten Koordinatensystem, eine Referenzierung unter Berücksichtigung der die relativen Referenzsinformation im absoluten Koordinatensystem durchgeführt werden kann.

Die Messungen zwischen dem Messgerät und dem Fluggerät können dabei auf unterschiedliche Arten erfolgen. Zum einen kann das Messgerät als Vermessungsgerät, z.B. Totalstation, ausgebildet sein und mit diesem Vermessungsgerät ein Reflektor am Fluggerät aktiv angezielt werden. Daraus können Winkel vom Messgerät zum Fluggerät bzw. zum Reflektor und gegebenenfalls zusätzlich eine Entfernung zwischen den beiden Geräten bestimmt werden. Alternativ oder zusätzlich kann das Fluggerät ein Modul zur Aussendung von Pseudo-Satelliten-Signalen, auf deren Basis die Entfernung zum Vermessungsgerät ermittelt werden kann, aufweisen und damit die jeweils aktuelle Position des Referenzpunkts bzw. der Referenzkomponente in Form der Pseudo-Satelliten-Signale bereitgestellt werden. Auf Seiten des Messgeräts, z.B. eines Vermessungsstabs, kann eine entsprechende Empfangseinheit zum Empfang der Pseudo-Satelliten-Signale vorgesehen sein, wobei - analog zu einem GNSS-System - eine Position des Messgeräts aus einer Anzahl gleichzeitig empfangener oder zeitlich definiert versetzter, insbesondere zeitsynchroner, Signale ableitbar ist. Durch den Empfang eines Pseudo-Satelliten-Signals kann eine Entfernung vom Messgerät zur Signalquelle, hier zum Fluggerät, bestimmt werden.

Die mobilen Referenzpunkte können dabei durch autonome bzw. semi-autonome, unbemannte Fluggeräte, z.B. als sich durch die Luft bewegende Drohnen, repräsentiert werden. Diese Fluggeräte können Positionen im Raum frei einnehmen, deren äussere Koordinaten beispielsweise durch Sensoren an Board des Fluggeräts (z.B. GNSS-Empfänger, Beschleunigungssensoren) oder von aussen durch ein weiteres Vermessungsgerät, welches das Fluggerät anzielt, bestimmt werden, sodass die Koordinaten bzw. die Position des mobilen Referenzpunkts zu einem bestimmten Zeitpunkt der Messungen bekannt sind. Die so bekannten Koordinaten können dann im Vermessungssystem z.B. durch das Fluggerät oder das Vermessungsgerät bereitgestellt werden. Nach einer durchgeführter Messung kann das Fluggerät autonom, semiautonom oder durch den Benutzer gesteuert eine weitere Position einnehmen und somit einen weiteren mobilen Referenzpunkt repräsentieren. Die Anzahl der für die eindeutige Bestimmung des Neupunkts nötigen Referenzpunkte kann dabei vom jeweiligen angewendeten Verfahren abhängen.

Die mobilen Referenzpunkte bzw. das Fluggerät bzw. die Referenzkomponente am Fluggerät können entsprechend der Messaufgabe unter Berücksichtigung der Umgebungsbedingungen optimal, insbesondere automatisch, positioniert werden, sodass aufgrund einer geeigneten Geometrie der Referenzpunktanordnung die Bestimmung der Position des Neupunkts oder des Messgeräts mit höherer Genauigkeit erfolgen kann. Alternativ oder zusätzlich zu einem Fluggerät, welches hintereinander die Rolle mehrerer Referenzpunkte einnimmt, kann auch der Einsatz von mehreren Fluggeräten erfolgen, welche statisch an einer Position je einen Referenzpunkt darstellen.

Im Rahmen der Erfindung kann die Position der mobilen Referenzpunkte bzw. der Referenzkomponente zum bestimmten Zeitpunkt verschiedenartig bestimmt werden. Es kann die Position des Fluggeräts festgestellt werden, indem ein an dem Fluggerät angeordnetes Modul z.B. ein Reflektor von einem Vermessungsgerät, beispielsweise von einer Totalstation, anzielbar ist. Dabei kann die Position des Vermessungsgeräts z.B. dadurch bereits bekannt sein, dass vorab ein Einmessvorgang vermessungsgeräteseitig durchgeführt wurde und das Gerät somit z.B. durch Anmessung bekannter Punkte in einem übergeordneten Koordinatensystem eine Eigenpositionsbestimmung durchführen konnte. Wird nun von dieser Vermessungsstation ein Reflektor an dem Fluggerät angezielt, kann durch Bestimmung der Ausrichtung eines emittierten Messstrahls die Richtung zu dem Fluggerät bestimmt und anhand einer mittels des Messstrahls durchgeführten Entfernungsmessung eine Distanz zu dem Fluggerät festgestellt werden. Aus diesen Grössen kann die relative Position des Fluggeräts zum Vermessungsgerät eindeutig und exakt bestimmt und mit Kenntnis der Position des Vermessungsgeräts eine absolute, insbesondere geodätisch genaue, Positionierung des Fluggeräts abgeleitet werden. Auf Basis der so, insbesondere fortlaufend, bestimmten Position des Fluggeräts kann die Steuerung des Fluggeräts, insbesondere automatisch, durchgeführt werden. Dafür können aus den Positionsinformationen Steuerungsdaten gewonnen und mittels dieser das Fluggerät beispielsweise automatisch zu einer definierten Sollposition geflogen werden.

Basierend auf der so zu einem gemeinsamen Zeitpunkt bzw. in einem gemeinsamen Zeitfenster bestimmten absoluten Position der Referenzpunkte und den durchgeführten Messungen zwischen den Referenzpunkten und dem Messgerät kann die Position des Messgeräts oder ausgehend von diesem Messgerät eine Position eines anzumessenden Neupunktes in einem absoluten Koordinatensystem mittels geodätischer Verfahren wie z.B. Rückwärtsschnitt oder Bogenschnitt berechnet werden. Dies kann beispielsweise "online" durch eine Recheneinheit im Fluggerät oder "offline" nach der Vermessung an einem Computer im Büro erfolgen. Zur Ausführung der Positionsbestimmung kann z.B. eine Referenzierung der bestimmten relativen Positionen mit dem jeweiligen absoluten Koordinatensystem erfolgen.

Im Vermessungswesen sind zur Bestimmung der Position oder der Koordinaten eines Punkts unter anderen die Verfahren des Rückwärtsschnitts und des Bogenschnitts bekannt, wobei weitere Verfahren bzw. eine detaillierte Beschreibung zu finden sind in "Vermessungskunde", Heribert Kahmen, Gruyter Verlag, 19. Auflage, 1997.

Beim Rückwärtsschnitt wird das Vermessungsgerät z.B. auf einem Neupunkt aufgestellt und von diesem die Richtungswinkel zu mindestens drei koordinativ bekannten Referenzpunkten gemessen. In der Praxis werden dazu oft so genannte Fernziele (z.B. Kirchtürme oder Gipfelkreuze) verwendet, deren Koordinaten von einer amtlichen Vermessung bestimmt wurden und dadurch bekannt sind. Aus den Koordinaten der Referenzpunkte sowie aus den gemessenen Richtungswinkeln können dann die Koordinaten des Neupunkts berechnet werden.

Beim Bogenschnitt werden ausgehend von einem Neupunkt die Distanzen zu mindestens drei koordinativ bekannten Referenzpunkten gemessen. Unter Berücksichtigung, dass alle Punkte, die von einem bekannten Punkt eine bestimmte Distanz entfernt sind, auf einer Kugel liegen, kann der Neupunkt als Schnittpunkt von den drei Kugeln, welche sich aus den Distanzmessungen zu den drei koordinativ bekannten Referenzpunkten ergeben, berechnet werden.

Ferner kann die Feststellung der Position der Referenzpunkte oder einer Abweichung aus einer vorgegebenen Position kann fortlaufend durch eine mit dem Fluggerät in Kontakt stehende Systemkomponente erfolgen. Dafür kann eine der Systemkomponente zugeordnete Sendeeinheit Positionierungssignale bereitstellen, die von einem Empfänger an dem Fluggerät bzw. der Referenzkomponente empfangen werden können. Weist diese Anordnung z.B. einen GNSS-Sender auf bzw. wird ein GNSS-System dafür genutzt die Position der Referenzkomponente genau zu bestimmen, so kann das Fluggerät bzw. die Referenzkomponente einen GNSS-Empfänger aufweisen, mittels welchem eine Positionsinformation empfangen und daraus eine Position bestimmt werden kann. Ein hierfür gebräuchliches GNSS-System kann beispielsweise durch GPS oder GLONASS repräsentiert sein. Entsprechend kann an dem Fluggerät eine GNSS-Antenne angeordnet sein, um die dem jeweiligen System zugeordneten Signale empfangen zu können.

Zusätzlich dazu kann eine GNSS-Referenzstation vorgesehen sein, welche ebenfalls zum Empfang von GNSS-Signalen ausgebildet ist und zudem Referenzdaten bzw. Korrekturdaten beispielsweise für eines der bekannten DGPS-, RTK- oder VRS-Verfahren zur Genauigkeitssteigerung für eine Positionsbestimmung zur Verfügung stellt. Ein für ein derartiges Referenzsystem angepasstes Fluggerät kann somit zusätzlich zum Empfang von Korrektursignalen ausgebildet sein und eine geodätische Positionsbestimmung unter Berücksichtigung dieser Signale durchführen.

Insbesondere kann die GNSS-Referenzstation auch durch ein weiteres Fluggerät als mobile Referenzstation realisiert werden. Hierfür kann wiederum die Position dieses Fluggeräts in einem äusseren, absoluten Koordinatensystem, insbesondere mittels eines Vermessungsgeräts und/oder mittels GNSS, bestimmt werden und durch eine an dem Fluggerät angeordneten Sendeeinheit ein GNSS-Korrektursignal auf Grundlage der bestimmten Position ausgesendet werden. Diese Korrektursignale können von weiteren Vermessungseinheiten oder zusätzlichen Fluggeräten zur Positionsbestimmung empfangen werden. Weiters kann eine Genauigkeit der aktuellen Fluggerätposition durch Sensoren an Bord des Fluggeräts gesteigert werden. Damit eine Genauigkeit der Korrektursignale erhalten bleibt, kann das Fluggerät ferner an einer geeigneten Position landen und das Aussenden des Korrektursignals in gelandetem Zustand erfolgen, insbesondere kann das Fluggerät an einem koordinativ bekannten Punkt landen und unter Berücksichtigung dieser Position Korrekturwerte zum Aussenden durch die Korrektursignale bestimmen.

Ein erfindungsgemässes geodätisches Vermessungssystem weist mindestens eine einen Referenzpunkt definierende Referenzkomponente, wobei eine absolute Position des Referenzpunkts bekannt ist, und mindestens eine eine relative Neupunktposition ableitende Neupunktbestimmungskomponente auf. Weiters ist eine gegenseitige relative Referenzinformation zwischen der Referenzkomponente und der Neupunktbestimmungskomponente ableitbar, insbesondere zum Zwecke einer Referenzierung gegenüber der Referenzpunktposition. Das Vermessungssystem weist zudem ein auto-mobiles, unbemanntes, steuerbares Fluggerät auf, wobei das Fluggerät die Referenzkomponente trägt, durch die der mindestens eine Referenzpunkt als mobiler Referenzpunkt bereitgestellt wird. Ferner ist das Fluggerät derart ausgebildet, dass die Referenzkomponente durch das Fluggerät räumlich frei versetzbar, insbesondere im Wesentlichen positionsfest positionierbar, ist.

Mit einem derartigen erfindungsgemässen Vermessungssystem kann eine Position eines Neupunkts, beispielsweise ein Aufstellpunkt für ein Vermessungsgerät oder ein mit dem Vermessungsgerät anzielbarer Zielpunkt, in Abhängigkeit der Position mobiler Referenzpunkte abgeleitet werden. Die Referenzpunkte werden hier durch ein Fluggerät bzw. UAV (Unmanned Aerial Vehicle) bereitgestellt, wobei die Position des jeweiligen Referenzpunkts, z.B. aus einer Positionsmessung, bekannt ist. Mittels der Neupunktbestimmungskomponente (z.B. Totalstation, Theodolit, Vermessungsstab) kann nun auf Basis der bekannten Referenzpunktposition eine relative Beziehung zwischen der an dem Fluggerät angeordneten Referenzkomponente und der Neupunktbestimmungskomponente abgeleitet werden und somit die relative Referenzinformation für die Neupunktbestimmungskomponente zum UAV ermittelt werden. Daraus, insbesondere aus einer wiederholten Informationsbestimmung zu weiteren durch das UAV bereitgestellten oder geografisch bekannten Referenzpunkten, kann eine Position der Neupunktbestimmungskomponente bestimmt werden. Je nach Anwendungsfall und Art der Neupunktbestimmungskomponente kann dabei eine Berücksichtigung einer bestimmten Anzahl von Referenzinformationen zur eindeutigen und genauen Positionsbestimmung notwendig sein.

Das Vermessungssystem kann ferner eine Referenzpunktbestimmungskomponente zur Bestimmung der absoluten Referenzpunktposition in einem absoluten Koordinatensystem aufweisen. Durch eine bestimmte Positionierung der Referenzkomponente kann eine Sichtverbindung zwischen der Referenzkomponente und jeweils der Neupunktbestimmungskomponente und der Referenzpunktbestimmungskomponente mittelbar erzeugbar und eine Referenzierung der Neupunktposition im absoluten Koordinatensystem durchführbar sein.

Mit dem erfindungsgemässen Vermessungssystem kann somit eine absolute Position, d.h. eine Position in einem absoluten Koordinatensystem durch eine

Referenzpunktbestimmungskomponente, z.B. durch ein Vermessungsgerät oder durch GPS-Satelliten, bestimmt und bereitgestellt werden. Beispielsweise kann dabei eine aktuelle Position eines Fluggeräts in einem übergeordneten Koordinatensystem bestimmt und mittels Funk bereitgestellt bzw. den Komponenten des Systems zum Empfang angeboten werden. Mit der Neupunktbestimmungskomponente kann zudem eine relative Referenzinformation abgeleitet werden. Dabei kann das Ableiten der relativen Referenzinformation aus einer aktiven durch die Neupunktbestimmungskomponente erfolgten Messung oder passiv durch ein Empfangen und Verarbeiten von Signalen, die eine Positionsbestimmung zulassen bzw. eine signalabhängige Position repräsentieren, erfolgen. Die Neupunktbestimmungskomponente kann dabei beispielsweise als Totalstation, Vermessungsstab oder ähnliches geodätisches Messgerät ausgebildet sein.

Ferner kann eine Referenzinformationsübertragung zwischen den Systemkomponenten durchgeführt werden, wobei dabei Informationen hinsichtlich der jeweiligen relativen und absoluten Position und einer relativen Lage der Positionen zueinander zusammengeführt werden können. Durch das Fluggerät kann ausserdem eine Übertragungsbrücke hergestellt werden durch die ein Informationsaustausch zwischen den Systemkomponenten erfolgen kann. Die durch die Referenzkomponente erzeugte Brücke stellt jeweils eine Verbindung bzw. eine Sichtverbindung zwischen den Komponenten her. Durch die Sichtverbindung kann hierbei eine Übertragung von z.B. elektromagnetischen Signalen gewährleistet werden, wobei die Signale nicht durch Hindernisse unterbrochen oder abgeschattet sind bzw. trotz Abschattung die Signale sicher empfangen werden können. Das Fluggerät kann darüber hinaus eine freie Positionierung der Referenzkomponente im Raum, z.B. schwebend in der Luft, ermöglichen und damit eine gezielte und definierte Umgehung von signalunterbrechenden Hindernissen durchführbar machen.

Insbesondere kann erfindungsgemäss durch das räumliche Versetzen des Fluggeräts eine Anzahl von Referenzpunkten erzeugbar sein und das Fluggerät in einem Höhenbereich von einem Meter bis 1000 Metern, insbesondere in einem Bereich von zwei Metern bis 50 Metern, versetzbar und positionierbar sein. Der Referenzpunkt kann dabei als ein fester Bezugspunkt am Fluggerät verstanden werden, der in einem definierten räumlichen Verhältnis zu der Referenzkomponente, zu einem Reflektor, zu einem GNSS-Empfänger und/oder zu einem Pseudo-Satelliten-Modul steht und somit indirekt bei bekannter Referenzpunktposition eine Bestimmung der jeweiligen Position der jeweiligen Fluggerätkomponente ermöglicht. Ist im Umkehrschluss eine Position einer dieser Komponenten bekannt, kann auf die Referenzpunktposition geschlossen werden. Dieser Referenzpunkt kann durch das Fluggerät in der Luft frei positioniert oder bewegt werden. Dabei kann das Fluggerät in einem für geodätische Anwendungen geeigneten Höhenbereich fliegen, sodass eine jeweilige Vermessung oder Positionsbestimmung präzise erfolgen kann. Je nach Anforderung an die Messungen können hierbei die Höhen von Gebäuden oder anderen Geländehindernissen als relevante Zielflughöhenbereiche herangezogen werden, um eine Überwindung einer Sichtbehinderung bzw. Verbindungsunterbrechung durch z.B. das Gebäude zu erreichen.

Weiters kann ein erfindungsgemässes Vermessungssystem eine Auswerteeinheit zur Erfassung und Zuordnung der absoluten durch die Referenzpunktbestimmungskomponentebestimmten und bereitgestellten Referenzpunktposition des Referenzpunkts und einer jeweiligen relativen Referenzinformation zwischen der Referenzkomponente und der Neupunktbestimmungskomponente, insbesondere von gemessenen Winkeln und/oder einer Entfernungen zum jeweiligen Referenzpunkt, wobei die relative Referenzinformation durch die Neupunktbestimmungskomponente in Abhängigkeit der Referenzpunktposition und einer Position der Neupunktbestimmungskomponentebestimmbar und bereitstellbar ist, aufweisen. Zudem kann eine Erzeugung einer Paarung aus der Zuordnung der absoluten Referenzpunktposition und der jeweiligen relativen Referenzinformation durch die Auswerteeinheit erfolgen.

Mit einer derartigen Auswerteeinheit können somit zugehörige Wertepaare aus einer relativen und absoluten Referenzinformation bestimmt werden. So kann eine im absoluten Koordinatensystem bestimmte Referenzpunktposition mit einer relative bestimmten Information, wie z.B. einer Entfernung von einem Messgerät zum Referenzpunkt oder einem Winkel zwischen diesen, zu einer Paarung verknüpft werden. Aus derartigen Paarungen, insbesondere aus drei oder mehreren, kann in Folge eine Position des Messgeräts oder eines durch das Messgerät Zielpunkts erfolgen.

Im Rahmen der Erfindung kann in einem Vermessungssystem die Referenzkomponente einen Reflektor und die Referenzpunktbestimmungskomponenteein geodätisches Vermessungsgerät, insbesondere eine Totalstation oder einen Theodoliten, aufweisen. Dabei kann das Vermessungsgerät mindestens eine erste Anzieleinrichtung, insbesondere ZielFernrohr, aufweisen, wobei die erste Anzieleinrichtung zur Änderung deren Ausrichtung gegenüber einer ersten Basis des Vermessungsgeräts motorisiert schwenkbar ist und zumindest eine eine erste optische Zielachse definierende erste Emissionseinheit und eine erste Strahlungsquelle zur Emission eines ersten optischen Messstrahls zur Entfernungsmessung parallel, insbesondere koaxial, zur ersten optischen Zielachse aufweist. Ausserdem können eine erste Winkelmessfunktionalität zur hochpräzisen Erfassung der Ausrichtung der ersten Zielachse, und erste Auswertemittel zur Datenspeicherung und Steuerung der Ausrichtung der ersten Anzieleinrichtung vorgesehen sein. Der erste Messstrahl kann damit auf den Reflektor, insbesondere fortlaufend, ausrichtbar sein, sodass die absolute Referenzpunktposition des Referenzpunkts geodätisch genau bestimmbar und bereitstellbar ist.

Durch diese Anordnung kann die Position des Fluggeräts vermittelt über den an dem Fluggerät angebrachten Reflektor bestimmt und durch Zielverfolgung fortlaufend neu erfasst werden. Damit kann die relative Position des Fluggeräts zum Vermessungsgerät eindeutig und exakt bestimmt und mit Kenntnis der Position des Vermessungsgeräts eine absolute, insbesondere geodätisch genaue, Positionierung des Fluggeräts in einem absoluten Koordinatensystem abgeleitet werden. Auf Basis der so, insbesondere fortlaufend, bestimmten Position des Fluggeräts kann eine Steuerung des Fluggeräts durchgeführt werden. Dafür können aus den Referenzinformationen Steuerungsdaten gewonnen und mittels dieser das Fluggerät zu einer definierten Sollposition geflogen werden, wobei das Vermessungsgerät bereits im Vorfeld in ein Koordinatensystem durch Anmessen koordinativ bekannter Punkte eingemessen worden sein kann und daraus eine exakte Position des Fluggeräts in diesem Koordinatensystem bestimmbar sein kann.

Alternativ oder zusätzlich kann erfindungsgemäss die Referenzpunktbestimmungskomponente mindestens eine Sendeeinheit zur Aussendung von Positionierungssignalen aufweisen und die Referenzkomponente derart ausgebildet sein, dass die Positionierungssignale, insbesondere mittels einer GNSS-Antenne, empfangbar sind und die Referenzpunktposition aus den Positionierungssignalen bestimmbar ist. Insbesondere kann die Sendeeinheit als GNSS-Sender, insbesondere GNSS-Satellit, insbesondere GPS-, GLONASS- oder Galileo-Satellit, ausgebildet sein und die Positionierungssignale durch GNSS-Signale verkörpert sein. Weiters kann die Referenzpunktbestimmungskomponente eine GNSS-Referenzstation zur Aussendung von GNSS-Korrektursignalen aufweisen und die Referenzkomponente derart ausgebildet sein, dass die GNSS-Korrektursignale empfangbar und die Referenzpunktposition aus den empfangenen GNSS-Signalen und den GNSS-Korrektursignalen bestimmbar ist.

In Analogie zur Referenzpunktpositionsbestimmung mit einem Vermessungsgerät kann damit die absolute Position durch am Fluggerät empfangene GNSS-Signale bestimmt werden. Wird zusätzlich zu den verfügbaren GNSS-Signalen ein Korrektursignal einer Referenzstation herangezogen kann die Genauigkeit bei der Positionsbestimmung des Fluggeräts erhöht werden und in Folge eine Positionsbestimmung eines Messgeräts, welches sich an der Position des Fluggeräts referenziert, genauer erfolgen.

Insbesondere kann das erfindungsgemässe Vermessungssystem eine Steuereinheit aufweisen, wobei die Steuereinheit derart konfiguriert ist, dass eine räumliche geometrische Anordnung der Referenzpunkte, insbesondere automatisch, definierbar ist, insbesondere wobei die geometrische Anordnung der Referenzpunkte in Abhängigkeit einer Optimierung zur Erzeugung der Paarungen definierbar ist. Ferner kann die Steuereinheit derart konfiguriert sein, dass das Fluggerät in Abhängigkeit der mittels der Referenzpunktbestimmungskomponente, insbesondere fortlaufend, bestimmbaren Referenzpunktposition und/oder in Abhängigkeit der geometrischen Anordnung der Referenzpunkte, insbesondere automatisch, positionierbar ist. Weiters kann die Steuereinheit derart konfiguriert sein, dass eine Flugroute definierbar ist und das Fluggerät entlang der Flugroute bewegbar ist, insbesondere wobei die Flugroute in Abhängigkeit der räumlichen geometrischen Anordnung der Referenzpunkte definierbar ist.

Die Steuereinheit kann somit eine geeignete Anordnung der Referenzpunkte, an denen das Fluggerät positioniert werden kann, bestimmen, wobei das Bestimmen automatisch erfolgen kann unter Berücksichtigung einer optimalen Anordnung der Punkte hinsichtlich einer erreichbaren Genauigkeit bei der Bestimmung der Paarungen, d.h. hinsichtlich der Genauigkeit bei der Bestimmung der absoluten Referenzpunktposition und/oder der relativen Referenzinformation. Alternativ kann eine Definition von zu erreichenden Referenzpunktpositionen manuell durch einen Benutzer erfolgen und in das Vermessungssystem eingegeben werden, insbesondere mittels einer Fernbedienung und/oder durch die Eingabe eines CAD-Geländemodells über die Fernbedienung oder eine andere Datenschnittstelle. Damit kann eine Genauigkeit bei der Positionsbestimmung mittels eines Vermessungsgeräts und/oder mittels GNSS sowie eine Genauigkeit bei der Bestimmung von Entfernungen und/oder Winkeln zwischen einem Messgerät, dessen Position bestimmt werden soll, und dem Fluggerät berücksichtigt werden. Weiters kann die aktuelle Position des Fluggeräts in die Berücksichtigung der Positionierung einbezogen werden. Hierfür kann die Steuereinheit z.B. die Rotoren des Fluggeräts derart ansteuern, dass das Fluggerät zu einer definierten Sollposition bewegt und an dieser positioniert wird. Zusätzlich kann von der Steuereinheit eine Flugroute für das Fluggerät bestimmt werden und in Folge das Fluggerät derart gesteuert werden, dass sich dieses automatisch, semi-automatisch oder manuell entlang der Flugroute bewegt und sich insbesondere dabei von einem Referenzpunkt zum nächsten bewegt.

Die Bestimmung von anzufliegenden Positionen kann beispielsweise auf Grundlage eines CAD-Geländemodells erfolgen und bei dieser Bestimmung damit allfällige Hindernisse im Gelände automatisch berücksichtigt werden und z.B. durch eine geeignete Definition der Flugroute umgangen werden. Derartige Geländemodelle können z.B. mittels Funk oder via Kabel an das System, z.B. an das Fluggerät und/oder die Referenzpunktbestimmungskomponente und/oder die Neupunktbestimmungskomponente übertragen werden.

Zudem kann das erfindungsgemässe System eine Fernsteuereinheit aufweisen, wobei die Fernsteuereinheit derart ausgebildet ist, dass eine Steuerung des Fluggeräts und/oder eine Erzeugung der Paarungen durchführbar ist, insbesondere wobei eine Kommunikation zwischen der Fernsteuereinheit und/oder der Referenzpunktbestimmungskomponente und/oder der Neupunktbestimmungskomponente und/oder der Referenzkomponente kabelgebunden, mittels Funk-, Infrarot- oder Lasersignal durchführbar ist. Ein Benutzer des Vermessungssystems kann so mittels der Fernbedieneinheit das Fluggerät manuell steuern und somit individuell gewählte Punkte anfliegen und das Fluggerät an diesen positionieren. Ferner kann die manuelle Steuerung auch derart erfolgen, dass das Fluggerät fortlaufend bewegt und in der Bewegung Messungen zur Positionsbestimmung des Fluggeräts und Messungen zur Bestimmung relativer Referenzinformationen (Winkel und/oder Entfernungen zwischen dem Fluggerät und der Neupunktbestimmungskomponente) durchgeführt werden. Daraus können fortlaufend Paarungen erzeugt werden und aus diesen die Positionsbestimmung für das Messgerät erfolgen. Hierfür können kontinuierlich (neu) erzeugte Paarungen berücksichtigt und die Menge der zur Positionsbestimmung herangezogenen Paare vergrössert und damit die Genauigkeit bei der Bestimmung erhöht werden. Eine derartige ständige Genauigkeitssteigerung kann auch durch die automatischen Wahl von Referenzpunkten und daraus erzeugter Paarungen erfolgen, insbesondere wobei ebenfalls die Anzahl der hierfür berücksichtigten Paarungen ständig erweitert werden kann.

Weiters können mittels der Fernbedieneinheit Steuerbefehle und/oder Geländeinformationen (CAD-Modell) an eine weitere Komponente des Vermessungssystems übermittelt und zur Steuerung des Fluggeräts genutzt werden und Informationen, wie beispielsweise bestimmte Positionen, an die Fernbedieneinheit übertragen und dort einem Benutzer zur Verfügung gestellt werden, insbesondere wobei die Information auf einem Display darstellbar ist. Z.B. kann so eine Messumgebung mit darin positionierten Messgeräten und einem sich bewegenden bzw. einem positioniertem Fluggerät grafisch dargestellt werden.

Insbesondere kann das Fluggerät in einem erfindungsgemässen Vermessungssystem eine Sensoreinheit zur Bestimmung der Ausrichtung des Fluggeräts aufweisen, insbesondere einen Neigungssensor, ein Magnetometer, einen Beschleunigungssensor, einen Drehratensensor und/oder einen Geschwindigkeitssensor. Durch Messungen mit dieser Sensoreinheit kann eine Positionsbestimmung des Fluggeräts unterstützt und deren Genauigkeit verbessert werden. Zudem kann eine Positionsbestimmung damit unabhängig von äusseren Messsystemen zur Positionsbestimmung erfolgen, indem z.B. eine Startposition des Fluggeräts bekannt ist und darauf basierend die Bewegung - insbesondere Geschwindigkeit und Richtung - und Änderungen in der Bewegung des Geräts durch die Sensoren erfasst werden. Ausserdem kann mit der Sensoreinheit eine Bestimmung der Ausrichtung zur Steuerung des Fluggeräts durchgeführt werden. Weiterhin kann die Sensoreinheit z.B. bei einem Ausfall der Referenzpunktbestimmungskomponente zur Positionsbestimmung des Fluggeräts oder einer Unterbrechung einer Messverbindung, z.B. eines optischen Messstrahls oder eines GPS-Signals, zum Fluggerät eine zeitweise Positionsbestimmung durchführbar machen, beispielsweise um einen Messstrahl wieder auf das Fluggerät auszurichten oder das Fluggerät derart zu steuern, dass ein GPS-Signal wieder empfangbar wird.

Erfindungsgemäss kann insbesondere die Referenzkomponente derart ausgebildet sein, dass die Referenzpunktposition und/oder die relative Referenzinformation durch die Referenzkomponente mittelbar bereitstellbar sind, insbesondere wobei die Referenzkomponente einen Sender zur Aussendung und/oder eine Empfangseinheit zum Empfang der Referenzpunktposition und/oder der relativen Referenzinformation aufweist, insbesondere wobei die Referenzpunktposition und/oder die relative Referenzinformation kabelgebunden, mittels Funk-, Infrarot- oder Lasersignal, übermittelbar sind, insbesondere wobei die Referenzpunktposition den Positionierungssignalen aufmodulierbar ist.

Die Referenzkomponente kann so als Übertragungsbrücke für Referenzinformationen bzw. für Signale, welche Winkel, Entfernungen, Positionen und/oder Koordinaten repräsentieren, dienen. Damit können derartige Informationen von der Referenzpunktbestimmungskomponente (Vermessungsgerät oder GPS-Satelliten) zu der Neupunktbestimmungskomponente (Vermessungsstab oder Vermessungsgerät) übermittelt werden, auch dann wenn eine direkte Verbindung zwischen den beiden Komponenten nicht herstellbar ist. Für die derartige Übermittlung können weiters die Informationen den Signalen aufmoduliert werden, durch die zum einen die Positionsbestimmung des Fluggeräts erfolgt und/oder zum anderen die Referenzinformationen bestimmt werden.

Im Rahmen der Erfindung kann die Referenzkomponente des erfindungsgemässen Vermessungssystems den Reflektor und die Neupunktbestimmungskomponente eine zweite Anzieleinrichtung aufweisen, wobei die zweite Anzieleinrichtung zur Änderung deren Ausrichtung gegenüber einer zweiten Basis der Neupunktbestimmungskomponente motorisiert schwenkbar ist und zumindest eine eine zweite optische Zielachse definierende zweite Emissionseinheit und eine zweite Strahlungsquelle zur Emission eines zweiten optischen Messstrahls zur Entfernungsmessung parallel, insbesondere koaxial, zur zweiten optische Zielachse aufweist. Zudem können eine zweite Winkelmessfunktionalität zur hochpräzisen Erfassung der Ausrichtung der zweiten Zielachse und zweite Auswertemittel zur Datenspeicherung und Steuerung der Ausrichtung der zweiten Anzieleinrichtung angeordnet sein. Der zweite Messstrahl kann somit auf den Reflektor, insbesondere fortlaufend, ausrichtbar sein, sodass die relative Referenzinformation, insbesondere zur Positions-Referenzierung der Neupunktbestimmungskomponente, in Abhängigkeit der Referenzpunktposition bestimmbar und bereitstellbar ist, sodass die Paarungen und/oder die Neupunktposition im absoluten Koordinatensystem bestimmbar sind, insbesondere eine Position eines anmessbaren Zielpunkts.

Mittels dieser zweiten Anzieleinrichtung, die beispielsweise in einer Totalstation integriert ist, kann ein Winkel und/oder eine Entfernung zu dem Reflektor an der Referenzkomponente bestimmt werden und damit indirekt ein relatives Positionsverhältnis zwischen dem Fluggerät bzw. dem Referenzpunkts und der Totalstation bestimmt werden. Mit dieser relativen Referenzposition kann in Folge eine absolute Positionsbestimmung der Totalstation erfolgen, indem eine Beziehung zwischen den absoluten Koordinatensystem, in dem die Position des Fluggeräts bestimmt ist, und der relativen Referenzinformation hergestellt wird. Voraussetzung hierfür ist die Kenntnis der jeweiligen Position des Referenzpunktes im absoluten Koordinatensystem. Alternativ oder zusätzlich kann eine absolute Position - im Koordinatensystem, in dem die Position des Fluggeräts bestimmt ist - eines durch die Totalstation anmessbaren Zielpunkts erfolgen, insbesondere wobei die Position der Totalstation nicht bestimmt wird. Hierfür kann eine Relativposition des Zielpunkts bestimmt und diese Position wiederum durch eine Übertragung von Referenzinformation in dem absoluten System referenziert werden. Die Positionsbestimmung kann wiederum auf dem Erzeugen von Paarungen aus relativen Referenzinformationen, z.B. Winkel und/oder Entfernungen zwischen dem Referenzpunkt und der Totalstation, gegebenenfalls mit zusätzlichem Winkel und Entfernung zum Zielpunkt, und absoluten Referenzpunktposition basieren.

Im Rahmen der Erfindung kann die Referenzkomponente des erfindungsgemässen Vermessungssystems ferner ein Pseudo-Satelliten-Modul zur Aussendung der Positionierungssignale, insbesondere wobei die Positionierungssignale die absolute Referenzpunktposition repräsentieren, aufweisen und die Neupunktbestimmungskomponente einen Pseudo-Satelliten-Empfänger aufweisen, wobei der Pseudo-Satelliten-Empfänger derart ausgebildet ist, dass die von dem Pseudo-Satelliten-Modul ausgesendeten Positionierungssignale empfangbar und die relative Referenzinformation bestimmbar und bereitstellbar ist, sodass die Neupunktposition im absoluten Koordinatensystem bestimmbar ist.

Durch diese Anordnung kann eine Entfernung beispielsweise zwischen einem Vermessungsstab und dem Fluggerät bzw. dem Referenzpunkt bestimmt werden. Der Vermessungsstab kann dabei eine passive Einheit darstellen, wobei die Pseudo-Satelliten-Signale, die eine Position der Referenzkomponente und damit die Position des Fluggeräts repräsentieren und bereitstellen, empfangen werden können. Aus einer Anzahl, insbesondere aus vieren, bei gegebener Zeitsynchronität der Signale bzw. bei einer bekannten zeitlichen Abweichung der Signale aus dreien, solcher empfangener Signale kann eine relative Positionsbestimmung des Vermessungsstabs - analog zu einem GNSS-Verfahren - erfolgen. Zudem kann die Positionsbestimmung des Vermessungsstabs oder eines Vermessungsgeräts, welches zum Empfang entsprechender Signale ausgebildet ist, aus gleichzeitig zur Bestimmung benutzten GNSS-Signalen und Pseudo-Satelliten-Signalen erfolgen.

Die Erfindung betrifft weiters ein geodätisches Referenzierungsverfahren mit mindestens einem Referenzpunkt dessen absolute Position bekannt ist und mindestens einer eine relative Neupunktposition ableitenden Neupunktbestimmungskomponente. Dabei wird eine gegenseitige relative Referenzinformation, insbesondere zum Zwecke eines Referenzierens gegenüber der Referenzpunktposition, abgeleitet.

Weiters wird das Referenzinformationsableiten vermittels einer Referenzkomponente (Übertragungskomponente), durch die der mindestens eine Referenzpunkt als mobiler Referenzpunkt bereitgestellt wird, durchgeführt, wobei die Referenzkomponente von einem auto-mobilen, unbemannten, steuerbaren Fluggerät getragen wird und das Fluggerät derart ausgebildet ist, dass die Referenzkomponente durch das Fluggerät räumlich frei versetzt, insbesondere im Wesentlichen positionsfest positioniert, wird.

Weiters kann die absolute Referenzpunktposition in einem absoluten Koordinatensystem mit einer Referenzpunktbestimmungskomponente bestimmt werden, und/oder durch ein bestimmtes Positionieren der Referenzkomponente eine Sichtverbindung zwischen der Referenzkomponente und jeweils der Neupunktbestimmungskomponente und der Referenzpunktbestimmungskomponente mittelbar erzeugt werden und ein Referenzieren der Neupunktposition im absoluten Koordinatensystem durchgeführt werden.

Mit dem Fluggerät kann für das Referenzierungsverfahren eine Brücke zum Übertragen von Informationen hergestellt werden, wobei durch dieses Übertragen Referenzinformationen zwischen der Referenzpunktbestimmungskomponente und der Neupunktbestimmungskomponente ausgetauscht werden können und ein Referenzieren von Positionen erfolgen kann. So kann eine relative Positionsbeziehung zwischen der Neupunktbestimmungskomponente und der Referenzkomponente in ein absolutes Koordinatensystem übertragen werden und dadurch eine absolute Position, d.h. eine Positionsangabe im absoluten Koordinatensystem, der Neupunktbestimmungskomponente bestimmt werden. Zum Schaffen einer derartigen Übertragungsbrücke kann das Fluggerät und die von dem Fluggerät getragene Referenzkomponente frei im Raum positioniert werden. Dies ermöglicht das Herstellen einer mittelbaren Sichtverbindung zwischen jeweils dem Fluggerät bzw. der Referenzkomponente und der Referenzpunktbestimmungskomponente und der Neupunktbestimmungskomponente und somit das gegenseitige Informationsableiten.

Insbesondere kann im Rahmen des erfindungsgemässen geodätischen Referenzierungsverfahrens der mobile Referenzpunkt durch das Fluggerät räumlich versetzt werden, sodass eine Anzahl von Referenzpunkten erzeugt wird, und das Fluggerät in einem Höhenbereich von einem Meter bis 1000 Metern, insbesondere in einem Bereich von zwei Metern bis 50 Metern, versetzt und positioniert werden.

Weiters kann erfindungsgemäss ein Erfassen und Zuordnen der absoluten durch die Referenzpunktbestimmungskomponente bestimmten und bereitgestellten Referenzpunktposition des Referenzpunkts und einer jeweiligen relativen Referenzinformation, insbesondere von gemessenen Winkeln und/oder einer Entfernungen zum jeweiligen Referenzpunkt, wobei die relative Referenzinformation durch die Neupunktbestimmungskomponente in Abhängigkeit der Referenzpunktposition und einer Position der Neupunktbestimmungskomponente bestimmt und bereitgestellt wird, erfolgen. Ausserdem kann ein Erzeugen einer Paarung aus der Zuordnung der absoluten Referenzpunktposition und der jeweiligen relativen Referenzinformation erfolgen.

Durch die Angabe eines Referenzpunkts am Fluggerät kann eine absolute Position dieses Punkts durch die Referenzpunktbestimmungskomponente, beispielsweise eine Totalstation, ein Tachymeter oder ein Theodolit, bestimmt und bereitgestellt werden. Diese absolute Position kann somit in einem absoluten Koordinatensystem bestimmt werden.

Zusätzlich können mittels der Neupunktbestimmungskomponente, z.B. ausgeführt als Totalstation oder Vermessungsstab, Winkel und/oder Entfernungen (relative Referenzinformation) zum Fluggerät bzw. Referenzpunkt ebenfalls bestimmt und bereitgestellt werden. Diese bestimmten Grössen können einander jeweils zu einer Paarung zugeordnet werden. Für diese Zuordnung muss wiederum die Sichtverbindung zwischen dem Fluggerät und den weiteren Komponenten hergestellt werden. Dafür kann das Fluggerät derart bewegt werden, dass es in einer bestimmten Höhe bewegt oder positioniert wird, sodass eine Verbindung zwischen den Komponenten verhinderndes Hindernis überbrückt bzw. umgangen werden kann. Aus einer Anzahl von Paarungen kann im Folgenden eine Positionsbestimmung für die Neupunktbestimmungskomponente durchgeführt werden. Dies kann mittels im Vermessungswesen bekannter Verfahren, wie beispielsweise Rückwärtsschnitt oder Bogenschnitt erfolgen.

Weiters kann erfindungsgemäss eine räumliche geometrische Anordnung der Referenzpunkte, insbesondere automatisch, definiert werden, insbesondere wobei die geometrische Anordnung der Referenzpunkte in Abhängigkeit des Erzeugens der Paarungen optimiert wird. Zudem kann das Fluggerät in Abhängigkeit der, insbesondere fortlaufend, bestimmbaren absoluten Referenzpunktposition und/oder in Abhängigkeit der geometrischen Anordnung der Referenzpunkte, insbesondere automatisch, positioniert werden, und/oder eine Flugroute definiert werden und das Fluggerät entlang der Flugroute bewegt werden, insbesondere wobei die Flugroute in Abhängigkeit der räumlichen geometrischen Anordnung der Referenzpunkte definiert wird.

Zum Erzeugen der Paarungen können die Referenzpunkte, die durch das Fluggerät mobil und frei positionierbar sind, bzw. deren Anordnung und Positionierung derart bestimmt werden, dass beim Bestimmen der absoluten Position der Neupunktbestimmungskomponente und/oder bei Erzeugen der Paarungen eine möglichst hohe Genauigkeit erzielt wird. Hierfür kann das Fluggerät entsprechend an die jeweilige Position geflogen werden und dessen Position, insbesondere fortlaufend, geodätisch genau bestimmt werden. Eine Genauigkeitssteigerung kann zudem dadurch erreicht werden, dass die Anzahl der zur absoluten Positionsbestimmung der Neupunktbestimmungskomponente herangezogenen Paarungen fortlaufend mit dem Erzeugen neuer Referenzpunkte erhöht und eine Bestimmungsunsicherheit damit verringert wird. Eine geeignete Anordnung der Referenzpunktposition kann beispielsweise automatisch erfolgen, wobei auf Grundlage eines digitalen Geländemodells und gegebenenfalls unter Berücksichtigung einer Position eines Vermessungsgeräts, welches die Position des Fluggeräts feststellt, die Punkte festgelegt werden können. Zudem kann die Definition der Referenzpunktpositionen manuell erfolgen und ein Benutzer diese Punkte im Rahmen des Referenzierungsverfahrens frei definieren und das Fluggerät manuell, z.B. mit einer Fernbedienung, zu diesen Positionen steuern bzw. bewegen und dort positionieren. Z.B. kann eine geeignete geometrische Anordnung der Punkte derart festgelegt werden, dass aus einem Rückwärtsschnitt oder aus einem Bogenschnitt kein schleifender Schnitt resultiert, sondern insbesondere ein Winkel zwischen einer zu bestimmenden Neuposition und den jeweiligen aufeinanderfolgenden Referenzpunkten jeweils grösser als 90° ist. Ferner kann die Flugroute manuell oder automatisch bestimmt werden, entlang derer das Fluggerät fliegen soll. Die Route kann automatisch auf Basis des Geländemodells, z.B. CAD-Modell, und in Abhängigkeit von allfälligen Hindernissen bzw. von bereits festgelegten Sollreferenzpunkten geplant werden. Das Fluggerät kann vollautomatisch entlang dieser Route fliegen oder semi-automatisch gesteuert werden, d.h. das Fluggerät kann einen Referenzpunkt anfliegen und sich dort positionieren und auf eine Benutzereingabe hin automatisch zum nächsten Punkt fliegen.

Insbesondere können im Rahmen des erfindungsgemässen Verfahrens von der Referenzpunktbestimmungskomponente bereitgestellte Positionierungssignale von der Referenzkomponente empfangen werden, insbesondere von GNSS-Satelliten bereitgestellte GNSS-Signale, insbesondere wobei die GNSS-Signale repräsentiert werden durch GPS-, GLONASS- oder Galileo-Signale, und die absolute Referenzpunktposition aus den empfangenen Positionierungssignalen bestimmt und bereitgestellt werden. Ferner kann das Bestimmen und Bereitstellen der Referenzpunktposition mittels eines an der Referenzkomponente reflektierten von der Referenzpunktbestimmungskomponente emittierten ersten Messstrahls erfolgen, und/oder ein Bestimmen einer Ausrichtung des Fluggeräts in Nick-, Roll- und Gierrichtung erfolgen, insbesondere wobei das Bestimmen der Ausrichtung mittels einer internen, dem Fluggerät zugeordneten Sensoreinheit, insbesondere mittels Neigungssensor, Magnetometer, Beschleunigungssensor, Drehratensensor und/oder Geschwindigkeitssensor, erfolgt.

Durch die oben genannten Verfahren können jeweils die Position und/oder die Ausrichtung des Fluggeräts an der jeweiligen Flugposition bestimmt und bereitgestellt werden, wobei diese Information zum einen für das Steuern des Fluggeräts weiterverarbeitet und/oder zum anderen zur absoluten Positionsbestimmung der Neupunktbestimmungskomponente herangezogen werden kann.

Insbesondere können erfindungsgemäss im Rahmen des Verfahrens von der Referenzkomponente Positionierungssignale, insbesondere die Referenzpunktposition repräsentierende Pseudo-Satelliten-Signale, ausgesendet werden und die Positionierungssignale von der Neupunktbestimmungskomponente empfangen und in Abhängigkeit der Referenzpunktposition die relative Referenzinformation bestimmt wird, sodass die Neupunktposition im absoluten Koordinatensystem bestimmt wird.

Insbesondere kann erfindungsgemäss im Rahmen des Verfahrens das Bestimmen der relativen Referenzinformation mittels eines von der Neupunktbestimmungskomponente emittierten und an der Referenzkomponente reflektierten zweiten Messstrahls erfolgt, sodass die Paarungen und/oder die Neupunktposition im absoluten Koordinatensystem, insbesondere eine Position eines angemessenen Zielpunkts, bestimmt werden.

Das Bestimmen der relativen Referenzinformation kann somit aus zwei Arten erfolgen. Zum einen kann aktiv von der Neupunktbestimmungskomponente aus einem Anzielen des Fluggeräts erfolgen und daraus ein Winkel und/oder eine Entfernung zum Fluggerät ermittelt werden. Zum anderen kann vom Fluggerät ein Signal, welches eine jeweilige Position des Fluggeräts repräsentiert, ausgesendet und passiv von der Neupunktbestimmungskomponente empfangen werden (analog zu einem Positionsbestimmen mittels GPS). Daraus lässt sich wiederum eine Entfernung zum Fluggerät ableiten, insbesondere dann wenn gleichzeitig oder zeitlich versetzt mehrere, insbesondere zeitsynchrone, Signale empfangen werden.

Die Erfindung betrifft ferner ein auto-mobiles, unbemanntes, steuerbares Fluggerät, insbesondere eine Drohne, für ein erfindungsgemässes Vermessungssystem, wobei das Fluggerät räumlich frei versetzbar, insbesondere im Wesentlichen positionsfest positionierbar, ist. Das Fluggerät trägt eine Referenzkomponente zur Bereitstellung eines mobilen Referenzpunkts.

Insbesondere kann das erfindungsgemässe Fluggerät Steuerungsdaten zur Steuerung des Fluggeräts empfangen und/oder die Steuerungsdaten zur Steuerung des Fluggeräts durch eine Verarbeitungseinheit aus empfangbaren Referenzinformationen zur Bestimmung einer absoluten Referenzpunktpositin ableiten, insbesondere wobei eine Fluggerätsausrichtung durch eine dem Fluggerät zugeordnete Sensoreinheit bestimmbar ist. Weiters können die absoluten Referenzpunktposition und eine relative Referenzinformation durch die Verarbeitungseinheit verknüpfbar werden, sodass eine Paarung erzeugbar ist.

Erfindungsgemäss kann insbesondere das Fluggerät derart ausgebildet sein, dass der mobile Referenzpunkt durch das Fluggerät räumlich versetzbar, insbesondere im Wesentlichen positionsfest positionierbar, ist, sodass eine Anzahl von Referenzpunkten und Paarungen erzeugbar ist, und das Fluggerät in einem Höhenbereich von einem Meter bis 1000 Metern, insbesondere in einem Bereich von zwei Metern bis 50 Metern, versetzbar und positionierbar ist.

Insbesondere kann ferner die Referenzkomponente des Fluggeräts ein Pseudo-Satelliten-Modul zur Aussendung von Positionierungssignale zur Bestimmung der relativen Referenzinformation, insbesondere zur Bestimmung einer absoluten Neupunktposition in einem absoluten Koordinatensystem, aufweisen und/oder einen Reflektor zur Bestimmung der relativen Referenzinformation, insbesondere durch eine Anzielung des Reflektors mit einem Laserstrahl, aufweisen, sodass die Paarungen und/oder die Neupunktposition im absoluten Koordinatensystem, insbesondere eine Position eines anmessbaren Zielpunkts, bestimmbar sind.

Erfindungsgemäss kann ein unbemanntes, steuerbares, auto-mobiles Fluggerät zum Tragen einer Referenzkomponente für ein geodätisches Vermessungssystem zur Erzeugung einer Übertragungsbrücke zur Referenzinformationsableitung verwendet werden, insbesondere wobei durch die Referenzkomponente eine Sichtverbindung zwischen einzelnen Systemkomponenten herstellbar ist.

Ein weiterer Gegenstand der Erfindung ist eine Computerprogrammprodukt, das auf einem maschinenlesbaren Träger gespeichert ist, oder Computer-Daten-Signal, verkörpert durch eine elektromagnetische Welle, mit Programmcode zur Durchführung eines erfindungsgemässen Verfahrens, insbesondere wenn das Programm in einer elektronischen Datenverarbeitungseinheit ausgeführt wird. Das Computerprogrammprodukt oder Computer-Daten-Signal kann derart gestaltet sein, dass darin Steuerungsanweisungen, insbesondere in Form von Algorithmen, vorgesehen sind, mit welchen ein erfindungsgemässes Verfahren zum Erzeugen einer Übertragungsbrücke mit einem auto-mobilen, unbemannten, steuerbaren Fluggerät durchgeführt werden kann.

Das erfindungsgemässe Verfahren, das erfindungsgemässe System und das erfindungsgemässe Fluggerät werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine schematische Darstellung eines erfindungsgemässen Vermessungssystems;
- Fig. 2: eine erste Ausführungsform für ein erfindungsgemässes Vermessungssystem mit einem GNSS-System, einem Fluggerät und einem Messgerät;
- Fig. 3: eine weitere Ausführungsform für ein erfindungsgemässes Vermessungssystem mit einem GNSS-System, einem Fluggerät und einem Messgerät;
- Fig. 4: eine weitere Ausführungsform eines erfindungsgemässen Vermessungssystems mit einem GNSS-System, unbemannten Fluggeräten und einem Vermessungsstab;
- Fig. 5: eine weitere Ausführungsform eines erfindungsgemässen Vermessungssystems mit einem GNSS-System, einem unbemannten Fluggerät und einem Vermessungsgerät;
- Fig. 6: eine weitere Ausführungsform eines erfindungsgemässen Vermessungssystems mit einem unbemannten Fluggerät und zwei Vermessungsgeräten;
- Fig. 7a-b: geeignete Anordnungen von Referenzpunkten zur Bestimmung einer Neupunktposition;
- Fig. 8: ein erfindungsgemässes Bestimmen einer Neupunktposition durch mobile Referenzpunkte.

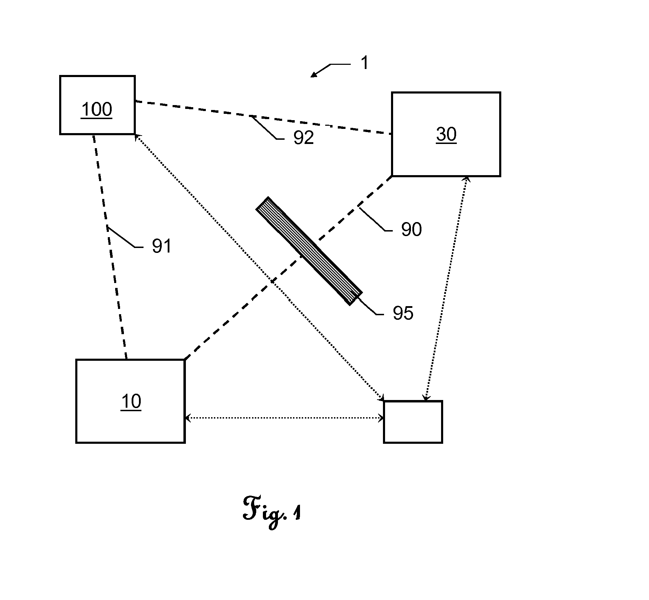

Figur 1 zeigt eine schematische Darstellung eines erfindungsgemässen Vermessungssystems 1 mit einer Referenzpunktbestimmungskomponente 10 und einer Neupunktbestimmungskomponente 30, wobei eine Position der Neupunktbestimmungskomponente 30 bestimmt werden soll. Die Position der Referenzpunktbestimmungskomponente 10 ist dabei beispielsweise aus vorangehenden Messungen bekannt und kann als Referenzposition zur Bestimmung der Position der Neupunktbestimmungskomponente 30 herangezogen werden. Ferner befindet sich ein Hindernis 95 in der direkten Sichtverbindung 90 zwischen den beiden Systemkomponenten 10,30 und unterbindet damit die Möglichkeit der Bestimmung der Position mittels eines direkten Verbindens der beiden Komponenten 10,30 untereinander. Eine solche Positionsbestimmung könnte - im Fall eines Zustandekommens der Sichtverbindung 90 - beispielsweise durch Entfernungsmessungen zwischen den Komponenten 10,30 entlang der Sichtverbindung 90 erfolgen.

Weiters ist zur Positionsbestimmung der Neupunktbestimmungskomponente 30 eine Referenzkomponente 100, welche von einem Fluggerät getragen wird (nicht gezeigt), vorgesehen. Durch die Referenzkomponente 100 wird jeweils eine Sichtverbindung 91 zwischen der Referenzpunktbestimmungskomponente 10 und der Referenzkomponente 100 und eine Sichtverbindung 92 zwischen der Neupunktbestimmungskomponente 30 und der Referenzkomponente 100 hergestellt. Mittels einer derartigen Anordnung kann somit eine Positionsbestimmung der Neupunktbestimmungskomponente 30 mittelbar erfolgen. Hierfür kann eine absolute Position, d.h. eine Position in einem äusseren, absoluten Koordinatensystem, der Referenzkomponente 100 mittels der Referenzpunktbestimmungskomponente 10 und gleichzeitig bzw. innerhalb eines gewissen Zeitfensters eine relative Referenzinformation, der Neupunktbestimmungskomponente 30 zur Referenzkomponente 100 bestimmt werden.

Mittels einer Auswerteeinheit 60 kann aus der bestimmten absoluten Position der Referenzkomponente 100 und der relativen Referenzinformation eine absolutePosition der Neupunktbestimmungskomponente 30 im absoluten Koordinatensystem abgeleitet werden. Hierfür können beispielsweise gemessene Winkel und/oder Entfernungen zwischen den Komponenten, welche jeweils bestimmte Positionen verkörpern können, der Auswerteeinheit 60 bereitgestellt werden und aus den bereitgestellten Grössen die zu bestimmende Position berechnet werden.

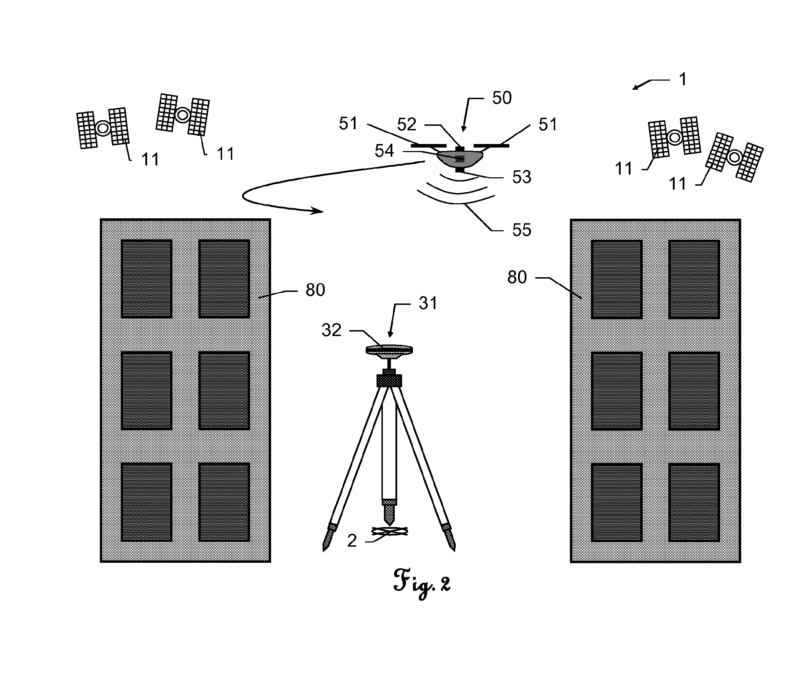

Figur 2 zeigt eine erste Ausführungsform eines erfindungsgemässen Vermessungssystems 1 mit einem GNSS-System verkörpert durch GNSS-Satelliten 11, einem Fluggerät 50 und einem Vermessungsinstrument 31. Das Fluggerät 50 ist mit einem Pseudo-Satelliten-Modul 53 zur Aussendung eines Signals 55 - vergleichbar mit einem GNSS-Signal - ausgestattet, welches von einem an dem Vermessungsinstrument 31 angeordneten Pseudo-Satelliten-Empfänger 32 empfangen werden kann. Auf Basis dieses Pseudo-Satelliten-Signals 55 kann eine Distanzmessung vom Fluggerät 50 zum Vermessungsinstrument 31 durchgeführt und somit relative Referenzinformationen bestimmt werden. Zudem können zum Zeitpunkt der Distanzmessung durch Sensoren am Fluggerät 50 dessen Position bestimmt und die Koordinaten bzw. die Position des mobilen Referenzpunkts, welcher dem Fluggerät 50 zugeordnet und in einem festen räumlichen Bezug zu diesem steht, an das Vermessungsinstrument 31 übermittelt werden. Die Referenzinformation kann kodiert auf das Signal 55 aufmoduliert sein und mit diesem vom Vermessungsinstrument 31 empfangen werden oder kann alternativ oder zusätzlich über Funk an dieses gesendet und mit einer weiteren Empfangseinheit empfangen werden.

Für die Bestimmung der absoluten Position (in einem äusseren, absoluten Koordinatensystem) des Vermessungsinstruments 31 bzw. für die absolute Positionsbestimmung eines Neupunkts 2, an welchem das Vermessungsinstrument 31 aufgestellt ist, kann sich das Fluggerät 50 zu zumindest drei signifikant unterschiedlichen Positionen bewegen und dadurch mehrere Referenzpunkten repräsentieren. An jeder dieser Positionen können eine Distanzmessung zwischen dem jeweiligen Referenzpunkt und dem Vermessungsinstrument 31 auf Basis der Pseudo-Satelliten-Signale 55 durchgeführt sowie die Koordinaten des Referenzpunkts bestimmt und an das Vermessungsinstrument 31 übermittelt werden. Basierend auf den Koordinaten der Referenzpunkte und den gemessenen Distanzen können in einer Recheneinheit, z.B. am Vermessungsinstrument 31, mittels Bogenschnitt die Position bzw. die Koordinaten des Neupunkts 2 bzw. des Vermessungsinstruments 31 berechnet werden.

Für die Bestimmung der Position der mobilen Referenzpunkte im absoluten Koordinatensystem ist das unbemannte Fluggerät 50 zusätzlich mit einer GNSS-Empfangseinheit 52 ausgestattet. Mit dieser werden GNSS-Signale von GNSS-Satelliten 11 empfangen und darauf basierend die absolute Position oder die Koordinaten des Fluggeräts 50 bzw. der mobilen Referenzpunkte berechnet. Zusätzlich kann das Fluggerät 50 mit einer Sensoreinheit 54, bestehend z.B. aus einem Magnetometer, einem Neigungssensor, Beschleunigungssensor und/oder einem Drehratensensor, ausgestattet sein. Durch entsprechende Messungen dieser Sensoreinheit 54 kann eine verbesserte Genauigkeit der Bestimmung der Referenzpunktposition erreicht werden bzw. eine Ausrichtung und/oder eine Bewegung des Fluggeräts 50 bestimmt werden.

Für die Positionsbestimmung kann das Fluggerät 50 jeweils geeignete Positionen einnehmen, wobei an jeweiligen Positionen jeweils eine Verbindung zwischen dem Fluggerät 50 und den GNSS-Satelliten 11 und zwischen dem Fluggerät 50 und dem Vermessungsinstrument 31 besteht. Das Vermessungsinstrument 31 bleibt während der Positionsbestimmung ortsfest an einer Position positioniert. Durch die Anordnung mindestens zweier, insbesondere von vier oder mehr, Rotoren 51 am Fluggerät 50 kann eine derartige Positionierung erfolgen und gehalten werden. Unter dieser Voraussetzung können gleichzeitig bzw. innerhalb eines definierten Zeitfensters eine Bestimmung der absoluten Position des Fluggeräts 50 durch die Satelliten 11 und der relativen Referenzinformation mittels der Pseudo-Satelliten-Signale 55 erfolgen. Aus diesen Bestimmungen können so jeweils Paarungen abgeleitet werden, aus welchen in Zusammenschau eine Positionsbestimmung des Neupunkts 2 bzw. der Position des Vermessungsinstruments 31 durchgeführt werden kann. Für eine zuverlässige und präzise Positionsbestimmung kann das Fluggerät 50 zur Erzeugung einer Anzahl von Referenzpunkten, insbesondere von drei signifikant unterschiedlichen Punkten, jeweils geeignete Positionen einnehmen. Dabei können die Positionen, insbesondere automatisch, so gewählt werden, dass eine Abschattung oder Unterbrechung der jeweiligen Verbindung zwischen den einzelnen Komponenten durch die Hindernisse, z.B. Gebäude 80, vermieden werden kann. Ferner können die Positionen eine vorteilhafte geometrische Anordnung repräsentieren und dadurch bei der Ausführung des Bogenschnitts zur Positionsbestimmung zu einer hohen Genauigkeit bei der Bestimmung führen.

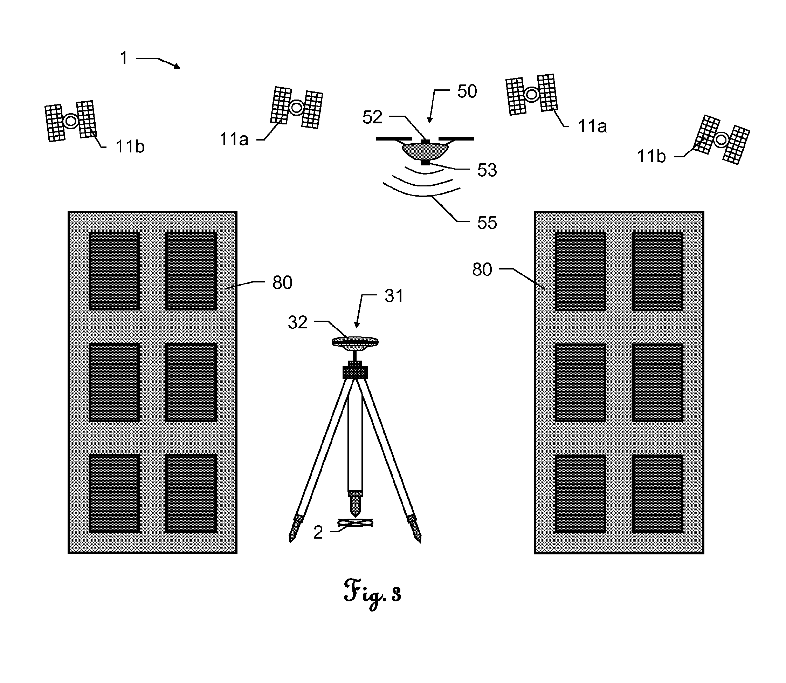

Das Pseudo-Satelliten-Signal 55, welches von den Sendeeinrichtungen 53 des Fluggerät 50 ausgesendet wird, kann zudem beispielsweise derart ausgestaltet sein, dass es einem GNSS-Signal entspricht und somit von herkömmlichen GNSS-Vermessungsgeräten empfangen und damit die Position ausgewertet werden kann. Figur 3 zeigt eine weitere Ausführungsform eines erfindungsgemässen Vermessungssystems 1 mit GNSS-Satelliten 11a,11b, einem Fluggerät 50 und einem Vermessungsinstrument 31. Das Fluggerät 50, das hier stellvertretend für eine Gruppe von Fluggeräten stehen kann, ist mit einem Pseudo-Satelliten-Modul 53 zur Aussendung eines Signals 55, welches mit einem GNSS-Signal korrespondiert oder ein Pseudo-Satelliten-Signal darstellt, ausgestattet, welches von einem an dem Vermessungsinstrument 31 angeordneten Pseudo-Satelliten-Empfänger 32 empfangen werden kann. Der Empfänger 32 kann dabei derart ausgebildet sein, dass GNSS-Signale oder Pseudo-Satelliten-Signale oder beide Signaltypen gemeinsam empfangen werden können. Auf Basis des Signals 55 kann eine Distanzmessung vom Fluggerät 50 zum Vermessungsinstrument 31 durchgeführt und somit relative Referenzinformationen bestimmt werden. Zudem können zum Zeitpunkt der Distanzmessung durch Sensoren am Fluggerät 50 dessen Position bestimmt und die Koordinaten bzw. die Position des mobilen Referenzpunkts, welcher dem Fluggerät 50 zugeordnet und in einem festen räumlichen Bezug zu diesem steht, an das Vermessungsinstrument 31 übermittelt werden. Die Referenzinformation kann kodiert auf das Signal 55 aufmoduliert sein und mit diesem vom Vermessungsinstrument 31 empfangen werden oder kann alternativ oder zusätzlich über Funk an dieses gesendet und mit einer weiteren Empfangseinheit empfangen werden.

Für die Bestimmung der Position des Vermessungsinstruments 31 bzw. eines Neupunkts 2, an welchem das Vermessungsinstrument 31 aufgestellt ist, können die GNSS-Signale der Satelliten 11a empfangen und herangezogen werden, wobei die gezeigten Satelliten 11a eine Gruppe von GNSS-Satelliten repräsentieren kann. Da durch die Hindernisse 80 ein Empfangen von ausreichend vielen Signalen der Satelliten 11a für eine hinreichende Positionsbestimmung verhindert wird, kann eine verlässlich genaue Positionsbestimmung nur auf Basis der empfangbaren GNSS-Signale nicht durchgeführt werden. Durch das eine oder mehrere Fluggeräte 50 können nun zusätzliche mobile Referenzpunkte zur Positionsbestimmung bereitgestellt werden. Das Fluggerät 50 kann sich hierzu zu jeweils definierten Positionen bewegen. An diesen Positionen kann jeweils eine Distanzmessung zwischen dem Referenzpunkt und dem Vermessungsinstrument 31 auf Basis der Pseudo-Satelliten-Signale 55 durchgeführt sowie die jeweilige Position des Referenzpunkts bestimmt und an das Vermessungsinstrument 31 übermittelt werden. Die Position des Referenzpunkts kann dabei z.B. mittels von der Satellitengruppe 11a bereitgestellter GNSS-Signale und durch Heranziehen zusätzlicher GNSS-Signale der Satelliten 11b, die wiederum stellvertretend für eine Gruppe von Satelliten gezeigt sind, erfolgen. Das Fluggerät 50 kann dabei derart positioniert werden, dass die Signale beider Satellitengruppen 11a,11b am Fluggerät 50 empfangen werden können und die von Fluggerät 50 ausgesendeten Signale 55 von der Empfangseinheit 32 am Vermessungsinstrument 31 empfangen werden können. Unter Verwendung der empfangbaren GNSS-Signale der Satelliten 11a und der zusätzlichen Pseudo-Satelliten-Signale 55 des Fluggeräts 50, insbesondere wobei mehrere Referenzpunkte durch das Fluggerät 50 bereitgestellt werden, kann somit die Position des Vermessungsinstruments 31 bzw. des Neupunkts 2 bestimmt werden.

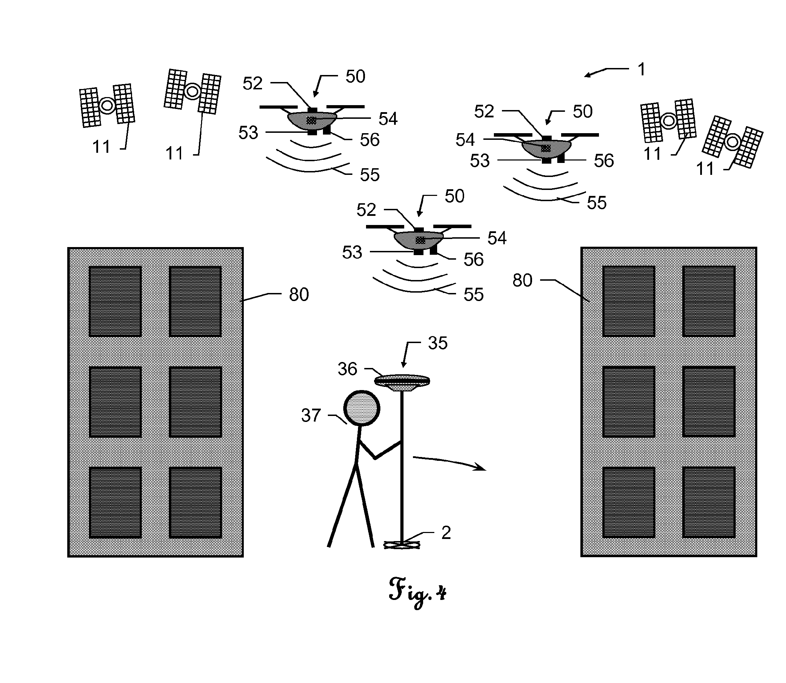

Figur 4 zeigt eine weitere Ausführungsform des erfindungsgemässen Vermessungssystems 1 mit GNSS-Satelliten 11, unbemannten Fluggeräten 50 und einem von einem Benutzer 37 geführten Vermessungsstab 35. In dieser Ausführungsform werden mehrere unbemannte Fluggeräte 50 eingesetzt. Jedes dieser Fluggeräte 50 ist mit einem Pseudo-Satelliten-Modul 53 zur Aussendung jeweils eines Signals 55 - vergleichbar mit einem GNSS-Signal - ausgestattet, welches von einem an dem Vermessungsstab 35 angeordneten Pseudo-Satelliten-Empfänger 36 empfangen werden kann. Auf Basis dieser Pseudo-Satelliten-Signale 55 können wiederum Distanzmessungen von den Fluggeräten 50 zum Vermessungsstab 35 durchgeführt und somit relative Referenzinformationen bestimmt werden. Anhand der dadurch ermittelten Distanzen und der Positionen bzw. Koordinaten der Fluggeräte 50 bzw. der Positionen der mobilen Referenzpunkte, welche den Fluggeräten 50 zugeordnet sind und in einem festen räumlichen Bezug zu diesen stehen, können mittels Bogenschnitt die Position bzw. die Koordinaten des Vermessungsstabs 35 bzw. des Neupunkts 2 berechnet werden, wobei die Positionen von den Fluggeräten 50 an den Vermessungsstab 35, z.B. auf die Pseudo-Satelliten-Signale 55 aufkodiert oder über Funk, übermittelt werden können.

In dieser Ausführungsform können die Fluggeräte 50 im Wesentlichen statisch an einer Position verharren. Zudem können zumindest drei oder vier Fluggeräte 50 eingesetzt werden und damit ausreichend Distanzmessungen für eine eindeutige Koordinatenbestimmung des Neupunkts 2 durchgeführt werden. Aufgrund der dadurch möglichen weitestgehend synchronen Distanzmessung von mehreren Fluggeräten 50 zum Vermessungsstab 35 ist hier eine fortlaufende bzw. kontinuierliche Bestimmung der Positionen und/oder Koordinaten möglich. Somit kann eine Positionsbestimmung des Vermessungsstabs 35 - im Gegensatz zur ersten Ausführungsform (Fig.2) - auch bei einer Bewegung des Stabs erfolgen.

Für die Bestimmung der Positionen der Referenzpunkte sind die unbemannten Fluggeräte 50 zusätzlich mit je einer GNSS-Empfangseinheit 52 ausgestattet. Mit dieser werden GNSS-Signale von GNSS-Satelliten 11 empfangen und darauf basierend die Positionen bzw. Koordinaten der Referenzpunkte berechnet, welche dem Vermessungsstab 35 bereitgestellt werden können. Ausserdem können die Fluggeräte 50 Empfangsgeräte 56 für das Empfangen der Pseudo-Satelliten-Signale 55 aufweisen, sodass auch Entfernungen zwischen den Fluggeräten 50 bestimmt und somit eine höhere Genauigkeit bei der Bestimmung der Referenzpunktpositionen erzielt werden kann. Zudem kann auch hier jedes Fluggerät 50 mit einer Sensoreinheit 54 ausgestattet sein, wobei die Messungen der Sensoreinheit 54 zu einer verbesserten Genauigkeit der Messpositionen führen bzw. zur Bestimmung der Ausrichtungen und Bewegungen der Fluggeräte 50 dienen kann. Letzteres kann besonders dann für die Steuerung wichtig sein, wenn die Fluggerät 50 schwebend an einer bestimmten Position verharren sollen und dabei äusseren Einflüssen, z.B. Wind, ausgesetzt sind. Dann kann auf Basis der Messungen der Sensoreinheit 54 eine Korrektur oder ein Ausgleich der Position der Fluggeräte 50 oder der ausgesendeten Signale 55 erfolgen.

Bei der Positionierung der Fluggeräte 50 kann auf eine optimale Messkonfiguration, d.h. auf eine geeignete geometrische Anordnung der Referenzpunktpositionen, unter Berücksichtigung von Hindernissen 80 geachtet werden. Die Fluggeräte 50 können so geeignete, eine mittelbare Sichtverbindung zwischen den Komponenten (GNSS-Satelliten 11 und Vermessungsstab 35) erzeugende Referenzpunkte beziehen und im Wesentlichen statisch schwebend an diesen verharren oder sich definiert gesteuert durch die Luft bewegen.

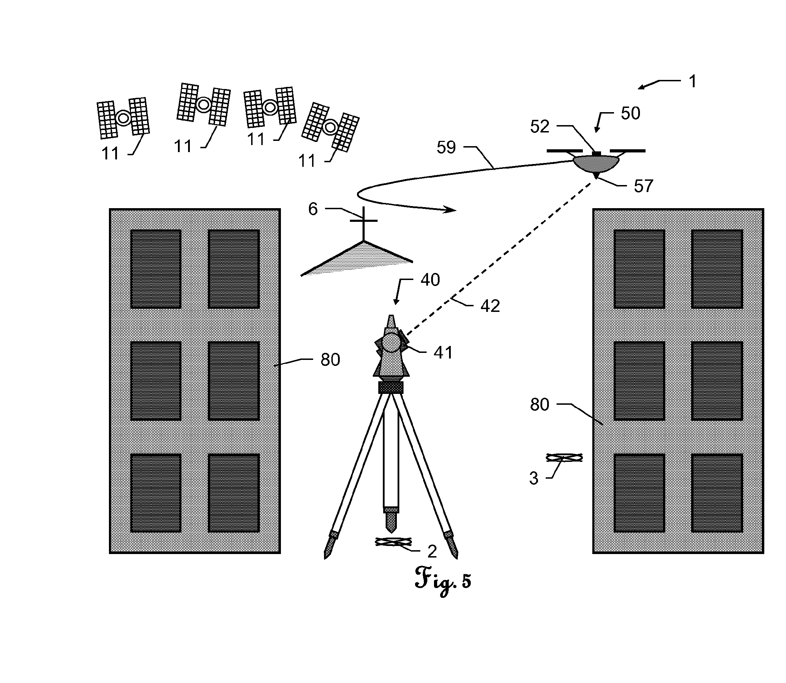

Figur 5 zeigt eine weitere Ausführungsform eines erfindungsgemässen Vermessungssystems 1 mit GNSS-Satelliten 11, einem unbemannten Fluggerät 50 und einem Vermessungsgerät 40, beispielsweise einer Totalstation oder einem Theodoliten. Für die Bestimmung einer Position des Fluggeräts 50 bzw. eines dem Fluggerät 50 zugeordneten Referenzpunkts ist das Fluggerät mit einem GNSS-Empfänger 52 versehen. Mit diesem können von einem GNSS-Satelliten, z.B. von einem GPS-Satelliten, ausgesendete GNSS-Signale, z.B. GPS-Signale, empfangen und dadurch die Position oder die Koordinaten des Referenzpunkts am Fluggerät 50 bestimmt und in weiterer Folge dem Vermessungsgerät 40 bereitgestellt werden. Durch eine Bewegung 59 des Fluggeräts 50, insbesondere entlang einer vorab definierten Flugroute, können wiederum mehrere Referenzpunkte, jeweils repräsentiert durch das Fluggerät 50 an einer jeweiligen Position, erzeugt und deren Positionen durch das GNSS-System bestimmt werden. Zudem können sich weitere bereits bekannte Referenzziele, hier repräsentier durch das Referenzziel 6, in Sichtweite befinden.

Ferner ist an dem unbemannten Fluggerät 50 eine Zielmarke oder ein Reflektor 57 angebracht, auf welchen der Messstrahl 42 einer Anzieleinheit 41 des Vermessungsgerät 40 ausgerichtet werden kann. Die Anzieleinheit 41 ist dafür um zwei Achsen manuell oder motorisiert gesteuert schwenkbar. Das Vermessungsgerät 40 kann zudem auf den Reflektor 57 des Fluggeräts 50 insbesondere automatisch ausgerichtet und an diesen "angekoppelt" werden, sodass eine automatische Zielverfolgung des Reflektors 57 bzw. des Fluggeräts 50 erfolgen kann. Eine derartige Zielverfolgung kann mittels einer in das Vermessungsgerät 40 integrierten automatischen Zielerkennungsvorrichtung (Automated Target Recognition, ATR) realisiert werden. Hierfür kann die Ablage eines von dem Reflektor 57 reflektierten Laserstrahls von einer Nullposition auf einer Photodiode derart erfasst werden, dass aus der Abweichung eine Bewegungsrichtung des Reflektors 57 relativ zum Vermessungsgerät 40 abgeleitet werden kann und das Vermessungsgeräts 40 dieser Bewegung entsprechend nachgeführt bzw. die Ausrichtung des Vermessungsgeräts 40 bzw. der Anzieleinheit 41 auf den Reflektor 57 nachgestellt werden kann, sodass die Abweichung auf der Photodiode minimiert wird. Basierend auf einer Messung mit einer an dem Vermessungsgerät 40 vorgesehenen Winkelmesseinrichtung kann der horizontale und/oder der vertikale Richtungswinkel zum Reflektor 57 am Fluggerät 50 in Relation zum Aufstellungsort des Vermessungsgerät 40 bestimmt werden. Insbesondere kann mit einem Distanzmesser am Vermessungsgerät 40 zusätzlich die Entfernung zum Fluggerät 50 gemessen werden.

Für die Positionsbestimmung des Neupunkts 2 bzw. der Position des Vermessungsgeräts 40 kann sich das Fluggerät 50 unterschiedlich positionieren und dadurch Referenzpunkte erzeugen, wobei deren minimale benötigte Anzahl für eine zuverlässige Positionsbestimmung von der jeweiligen Art der Messungen abhängen kann. Beispielsweise kann bei einer zusätzlichen Verwendung des bekannten Referenzziels 6 zur Positionsbestimmung die benötigte Anzahl anzuzielender mobiler Referenzpunkte verkleinert werden und die Bestimmung aus einer Kombination von mobilen Referenzpunkt und bekannter Referenzziele erfolgen. Dabei kann das Fluggerät 50 derart, insbesondere automatisch, positioniert werden, dass eine durch z.B. Gebäude 80 unterbrochene direkte Sichtverbindung zwischen den GNSS-Satelliten 11 und dem Vermessungsgerät 40 mittelbar durch das Fluggerät 50 überbrückt werden kann, sodass jeweils eine Verbindung zwischen Fluggerät 50 und GNSS-Satelliten 11 bzw. dem Vermessungsgerät 40 besteht. An jeder dieser Positionen wird mit dem Vermessungsgerät 40 eine Winkelmessung und/oder Distanzmessung zum Fluggerät 50 durchgeführt und eine relative, d.h. eine Position in einem relativen Koordinatensystem, Position des Fluggeräts 50 dem Vermessungssystem 1 bzw. relative Referenzinformationen bereitgestellt. Dies kann z.B. über Funk oder auf den Messstrahl 42 aufmoduliert erfolgen. Gleichzeitig bzw. innerhalb eines bestimmten Zeitfensters kann die jeweilige absolute Position, d.h. die Position des Fluggeräts 50 in einem äusseren, insbesondere absoluten, Koordinatensstem, durch GNSS bestimmt werden.

Auf Basis der gemessenen Richtungswinkel und/oder Entfernungen und der absoluten Koordinaten der Referenzpunkte können mittels geodätischer Verfahren (z.B. Rückwärtsschnitt oder Bogenschnitt) die Position bzw. Koordinaten des Neupunkts 2 bzw. die Position sowie gegebenenfalls die Orientierung des Vermessungsgeräts 40 berechnet werden. Ausserdem kann insbesondere ein weiterer Zielpunkt 3 mit dem Vermessungsgerät 40 angezielt und dessen Position oder Koordinaten bestimmt werden. Durch eine Koordinatentransformation kann nun auch die Position des Zielpunkts 3 ebenfalls im absoluten Koordinatensystem bestimmt werden. Zur Positionsbestimmung werden zudem die jeweils bestimmten relativen Informationen und absoluten Positionen bzw. die gemessenen Winkel und/oder Entfernungen und die bestimmte absolute Position des Fluggeräts 50 durch eine Berechnung einer relativen Beziehung miteinander in Bezug gebracht und aus einer Anzahl von daraus abgeleiteten Paarungen eine Position des Vermessungsgeräts 40 bzw. des Neupunkts 2 und/oder des Zielpunkts 3 im absoluten Koordinatensystem bestimmt.

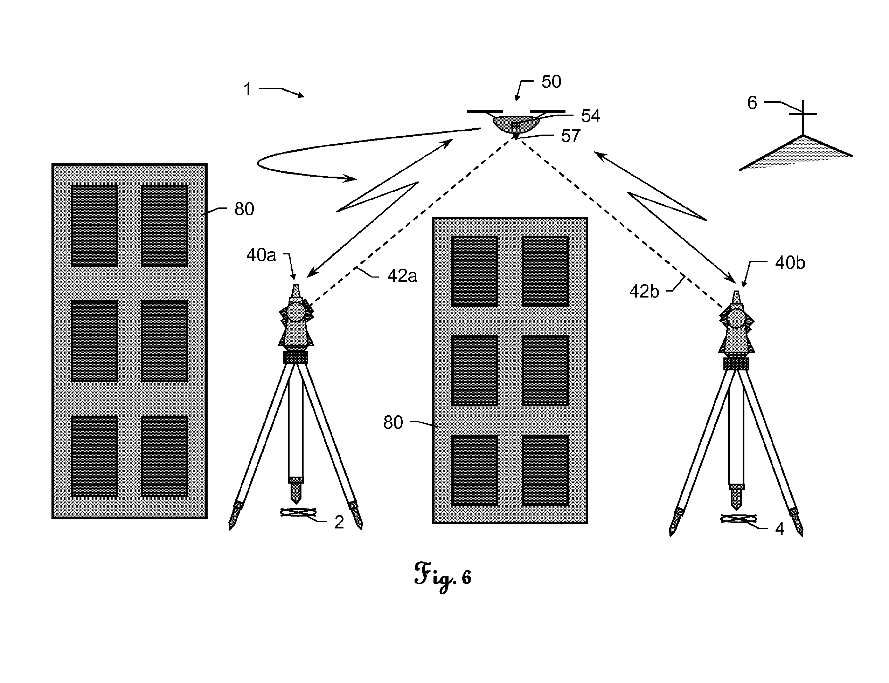

Figur 6 zeigt eine weitere Ausführungsform eines erfindungsgemässen Vermessungssystems 1 mit einem unbemannten Fluggerät 50 und zwei Vermessungsgeräten 40a,40b. In dieser Ausführungsform kann das Bestimmen der Referenzpunktposition bzw. der Position des Fluggeräts 50 im absoluten Koordinatensystem mit einem Vermessungsgerät 40b, dessen Messstrahl 42b auf einen am Fluggerät 50 befestigten Reflektor 57 ausgerichtet ist, insbesondere mittels Zielverfolgung an das Fluggerät 50 angekoppelt ist, mittels Winkelmessungen und Entfernungsmessungen durchgeführt werden. Die Position bzw. Koordinaten des Referenzpunkts werden dann dem Vermessungssystem 1 z.B. über Funk bereitgestellt, insbesondere an das Vermessungsgerät 40a übertragen. Zeitgleich können mit dem Vermessungsgerät 40a ebenfalls Winkelmessungen und/oder Entfernungsmessungen auf den am Fluggerät 50 befestigten Reflektor 57 mittels des Messstrahls 42a durchgeführt werden. Basierend auf den gemessenen Richtungswinkeln und/oder Entfernungen von Vermessungsgerät 40a und den durch das Vermessungsgerät 40b bestimmten Koordinaten der Referenzpunkte können über bekannte geodätische Verfahren (z.B. Rückwärtsschnitt oder Bogenschnitt) die Koordinaten des Neupunkts 2 sowie die Position und gegebenenfalls die Orientierung des Vermessungsgeräts 40a berechnet werden. Der durch das Fluggerät 50 bereitgestellte mobile Referenzpunkt kann somit als Einschaltpunkt dienen. Analog zu den vorgenannten Ausführungsformen kann das Fluggerät 50 geeignete Positionen einnehmen um eine durch Hindernisse 80 verursachte Sichtbehinderung zur überwinden und eine Anzahl an Referenzpunkten zur Verfügung zu stellen.

Die (absoluten)Koordinaten der mobilen Referenzpunkte sowie in weiterer Folge des Neupunkts 2 oder des Vermessungsgeräts 40a können sich auf ein lokales Koordinatensystem definiert über den Aufstellungspunkt 4 und die Ausrichtung des Messgeräts 40b beziehen. Darüber hinaus können vor dem Vermessungsvorgang die Koordinaten des Aufstellungspunktes 4 durch weitere Winkel- und/oder Entfernungsmessungen mit dem Messgerät 40b sowie dessen Orientierung zu in einem übergeordneten Koordinatensystem bekannten Referenzzielen 6 bestimmt werden. Dabei können ebenfalls im Vermessungswesen bekannte Verfahren zum Einsatz kommen.

Die mit dem Vermessungsgerät 40b bestimmten Koordinaten der mobilen Referenzpunkte können über Funk direkt an das Vermessungsgerät 40a übermittelt werden. Alternativ oder zusätzlich können dazu, z.B. wenn eine direkte Kommunikation aufgrund von Hindernissen 80 nicht möglich ist, die Referenzinformationen auch zuerst vom Vermessungsgerät 40b an das Fluggerät 50 gesendet und dann von dort an das Vermessungsgerät 40a übertragen werden. Eine Kommunikation bzw. Übermittlung von Messwerten kann zudem in umgekehrter Richtung ausgehend vom Vermessungsgerät 40a zum Gerät 40b erfolgen.

Darüber hinaus kann das Fluggerät 50 mit einer Sensoreinheit 54, beispielsweise bestehend aus einem Magnetometer, einem Neigungssensor, Beschleunigungssensor und/oder einem Drehratensensor, ausgestattet sein, wobei die Messungen der Sensoreinheit 54 zu einer verbesserten Genauigkeit bei der Positionsbestimmung der mobilen Referenzpunkte führen bzw. zur Bestimmung der Ausrichtungen und Bewegungen des Fluggeräts 50 dienen können.

Zudem kann diese Sensoreinheit 54 auch zu einer Bestimmung der Position der Referenzpunkte bzw. zumindest zu deren Grobbestimmung verwendet werden, insbesondere dann, wenn die Bestimmung der Positionen durch das Vermessungsgerät 40b fehlschlägt. Dieser Fall kann z.B. auftreten, wenn z.B. die automatische Zielverfolgung die Verbindung zum Ziel (Reflektor 57) verliert. In diesem Fall, kann die Grobposition basierend auf Messungen der Sensoreinheit 54 an das Vermessungsgerät 40a oder das Vermessungsgerät 40b über Funk übermittelt werden.

Basierend auf dieser Information kann das Vermessungsgerät 40b das Ziel wieder auffinden, die Verbindung wieder hergestellt und die automatische Zielverfolgung wieder ausgeführt werden.

Weiters können nach einer ersten, groben Positionsbestimmung des Neupunkts 2 bzw. der Position des Vermessungsgeräts 40a dessen Koordinaten über Funk an das Fluggerät 50 übermittelt werden. Basierend auf dieser Information kann eine Flugroute für das Fluggerät 50 automatisch angepasst werden, um eine optimale Geometrie für die Referenzpunkte für die Positionsbestimmung zu schaffen und somit eine höhere Genauigkeit zu erreichen. Die Informationsübertragung vom Vermessungsgeräts 40a,40b zum Fluggerät 50 kann auch über einen Laserstrahl erfolgen, insbesondere über den Messstrahl 42a,42b der für die Distanzmessung eingesetzt wird. Hierfür kann das Fluggerät 50 eine entsprechende Empfangseinrichtung aufweisen.

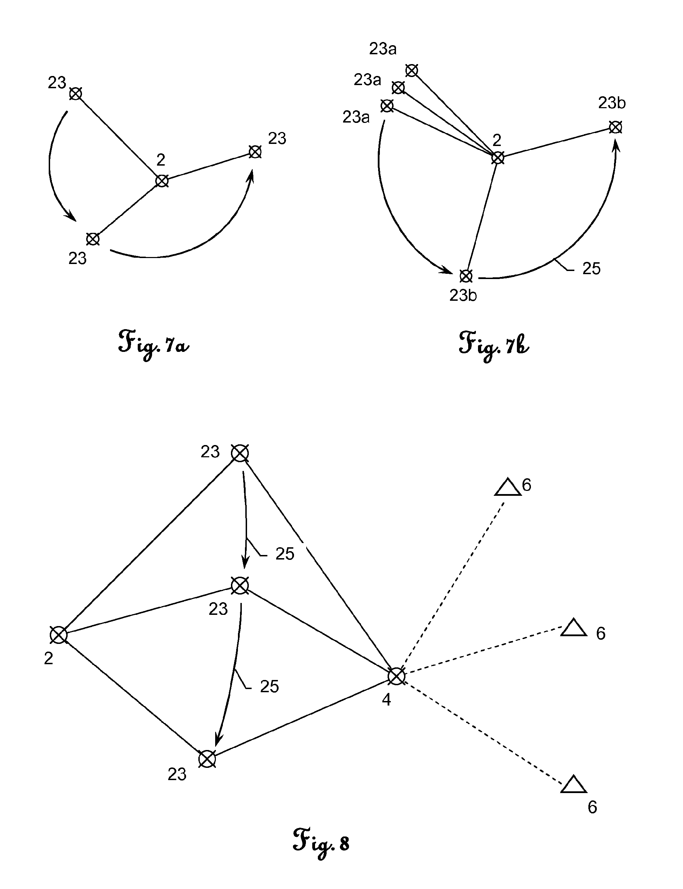

Die Figuren 7a und 7b zeigen jeweils eine geometrische Anordnung von Referenzpunkten 23,23a,23b zur erfindungsgemässen Bestimmung einer Position eines Neupunkts 2. In Figur 7a sind die Referenzpunkte 23 derart gewählt und angeordnet, dass eine Bestimmung einer Neupunktposition 2, beispielsweise durch einen Rückwärtsschnitt oder einen Bogenschnitt, eindeutig und zuverlässig erfolgen kann, da ein jeweiliger Rückwärtsschnitt und ein Bogenschnitt eine im Wesentlichen eindeutigen, insbesondere mit nur einer kleinen Unsicherheit behafteten, Schnittpunkt erzeugen.

Figur 7b hingegen zeigt eine Wahl von Referenzpunkten 23a,23b derart, dass diese eine optimale geometrische Konfiguration für die Bestimmung des Neupunkts 2 erst ergeben, nachdem die Punkte 23b als zusätzlich Referenzpunkte 23b hinzugefügt werden. Dazu können nach einer ersten groben Positionsbestimmung des Neupunkts 2 anhand der Referenzpunkte 23a die weiteren Referenzpunkte 23b für das Fluggerät 50 berechnet und angeflogen werden, welche zu einer optimalen geometrischen Anordnung der Punkte 23a,23b und somit zu einer höheren Genauigkeit bei der Bestimmung der Koordinaten des Neupunkts 2 führen. In Abhängigkeit dieser zu optimierenden Genauigkeit kann ausserdem die Flugroute 25 des Fluggeräts 50 kontinuierlich angepasst werden.

Zudem können durch eine geeignete Wahl der Referenzpunkte 23a,23b etwaige Hindernisse, welche eine Übertragung von Messsignalen an das Vermessungsgerät oder vom Vermessungsgerät weg stören, abschwächen oder verfälschen würden, vermieden werden. Dies kann im Wesentlichen automatisch erfolgen, indem vom Vermessungsgerät beim Empfangen des Messsignals dessen Signalqualität analysiert und bewertet wird. Bei einem schlechten Signal kann das Fluggerät 50 seine Position derart änderen, dass die Signalqualität gesteigert wird. Diese Information kann vom Vermessungsinstrument zum Fluggerät z.B. über Funk übertragen werden, wobei diese mit entsprechenden Sende- und Empfangseinrichtungen ausgestattet sein können. Zur Vermeidung bzw. Überbrückung von Hindernissen können auch Informationen aus einem Geoinformationssystem genutzt werden, welches z.B. die Positionen sowie die Ausdehnungen von Bauwerken enthalten kann.

Bei der Wahl der Referenzpunkte 23a,23b kann ferner auch die Empfangbarkeit des GNSS-Signals berücksichtigt werden, welches zur Positionsbestimmung des Fluggeräts selbst benutzt wird. Grundsätzlich kann diese Position mit höherer Genauigkeit bestimmt werden, wenn das Signal von möglichst vielen GNSS-Satelliten empfangen wird. Eine Optimierung kann daher dahingehend erfolgen, dass sich das Fluggerät eine Messposition sucht, welche das Empfangen von Signalen möglichst vieler GNSS-Satelliten ermöglicht, indem Signalabschattungen durch Hindernisse, wie z.B. Gebäude, vermieden werden. Zudem können bei der Wahl der Referenzpunkte Störeffekte, wie z.B. Multipath, berücksichtigt werden.

Figur 8 zeigt einen Ablauf einer erfindungsgemässen Bestimmung einer Neupunktposition 2. Dieser Ablauf kann insbesondere mit einem erfindungsgemässen Vermessungssystem 1 gemäss der Ausführung in Figur 6 durchgeführt werden. In einem ersten Schritt kann eine absolute Aufstellposition 4 eines Vermessungsgeräts 40b anhand von koordinativ bekannten, vom Vermessungsgerät 40b anzielbaren Punkten 6 bestimmt werden. Weiters kann ausgehend von der Aufstellposition 4 des Vermessungsgeräts 40b eine jeweilige absolute Referenzpunktposition 23, wobei diese Position mobil von einem Fluggerät 50 veränderbar sein kann, durch ein Anmessen des Referenzpunkts 23 durch das Vermessungsgerät 40b erfolgen. Zudem kann der jeweilige Referenzpunkt 23 von einem weiteren Vermessungsgerät 40a am Neupunkt 2 angezielt werden und eine relativen Positionsinformation beispielsweise Richtungswinkel und/oder Entfernung zu dem Punkt 23 bestimmt werden. Durch ein Bewegen des Fluggeräts 50 bzw. der Referenzpunkte 23 entlang einer Route 25 kann eine Anzahl von Referenzen erzeugt und daraus ein jeweiliges Wertepaar mit einer absoluten Positionsabgabe des Referenzpunkts 23 und einer relativen Referenzinformation beispielsweise Richtungswinkel und/oder Entfernung erzeugt werden. Aus zumindest dreier solchen Wertepaaren kann mittels der bekannten geodätischen Verfahren Bogenschnitt oder Rückwärtsschnitt dann auf die Position des Neupunkts 2 geschlossen werden.

Es versteht sich, dass diese dargestellten Figuren nur mögliche Ausführungsbeispiele schematisch darstellen. Die verschiedenen Ansätze können erfindungsgemäss ebenso miteinander sowie mit Systemen und Verfahren zum Positionsbestimmen oder Stationieren von Objekten oder zum Referenzieren von Positionen oder Koordinaten des Stands der Technik kombiniert werden.

## Patentansprüche

1. Geodätisches Vermessungssystem (1) mit
● mindestens einer einen Referenzpunkt (23,23a,23b) definierenden Referenzkomponente (100), wobei eine absoluten Position des Referenzpunkts bekannt ist und
● mindestens einer eine relative Neupunktposition (2,3) ableitenden Neupunktbestimmungskomponente (30), wobei eine gegenseitige relative Referenzinformation zwischen der Referenzkomponente (100) und der Neupunktbestimmungskomponente (30) ableitbar ist, insbesondere zum Zwecke einer Referenzierung gegenüber der Referenzpunktposition,
**dadurch gekennzeichnet, dass**
das Vermessungssystem (1) ein auto-mobiles, unbemanntes, steuerbares Fluggerät (50) aufweist, wobei
● das Fluggerät (50) die Referenzkomponente (100) trägt, durch die der mindestens eine Referenzpunkt (23,23a,23b) als mobiler Referenzpunkt (23,23a,23b) bereitgestellt wird, und
● das Fluggerät (50) derart ausgebildet ist, dass die Referenzkomponente (100) durch das Fluggerät (50) räumlich frei versetzbar, insbesondere im Wesentlichen positionsfest positionierbar, ist.

2. Geodätisches Vermessungssystem (1) nach Anspruch 1
**dadurch gekennzeichnet, dass**
● das Vermessungssystem (1) eine Referenzpunktbestimmungskomponente (10) zur Bestimmung der absoluten Referenzpunktposition in einem absoluten Koordinatensystem aufweist,
sodass durch eine bestimmte Positionierung der Referenzkomponente (100) eine
Sichtverbindung (90,91,92) zwischen der Referenzkomponente (100) und jeweils der Neupunktbestimmungskomponente (30) und der Referenzpunktbestimmungskomponente (10) mittelbar erzeugbar und eine Referenzierung der Neupunktposition (2,3) im absoluten Koordinatensystem durchführbar ist,
und/oder
● durch das räumliche Versetzen des Fluggeräts (50) eine Anzahl von Referenzpunkten (23,23a,23b) erzeugbar ist, und
● das Fluggerät (50) in einem Höhenbereich von einem Meter bis 1000 Metern, insbesondere in einem Bereich von zwei Metern bis 50 Metern, versetzbar und positionierbar ist,
und/oder
das Vermessungssystem (1) eine Auswerteeinheit (60) aufweist zur
● Erfassung und Zuordnung
□ der absoluten durch die Referenzpunktbestimmungskomponente (10) bestimmten und bereitgestellten Referenzpunktposition des Referenzpunkts (23,23a,23b) und
□ der jeweiligen relativen Referenzinformation zwischen der Referenzkomponente (100) und der Neupunktbestimmungskomponente (30), insbesondere von gemessenen Winkeln und/oder einer Entfernunge zum jeweiligen Referenzpunkt (23,23a,23b), wobei die relative Referenzinformation durch die Neupunktbestimmungskomponente (30) in Abhängigkeit der Referenzpunktposition und einer Position der Neupunktbestimmungskomponente (30) bestimmbar und bereitstellbar ist, und
● Erzeugung einer Paarung aus der Zuordnung der absoluten Referenzpunktposition und der jeweiligen relativen Referenzinformation.

3. Vermessungssystem (1) nach Anspruch 2
**dadurch gekennzeichnet, dass**
● die Referenzkomponente (100) einen Reflektor (57) aufweist und
● die Referenzpunktbestimmungskomponente (10) ein geodätisches Vermessungsgerät (40b), insbesondere eine Totalstation oder einen Theodoliten, aufweist mit mindestens
□ einer erste Anzieleinrichtung, insbesondere ZielFernrohr, wobei die erste Anzieleinrichtung zur Änderung deren Ausrichtung gegenüber einer ersten Basis des Vermessungsgeräts motorisiert schwenkbar ist und zumindest aufweist
● eine eine erste optische Zielachse definierende erst Emissionseinheit und
● eine erste Strahlungsquelle zur Emission eines ersten optischen Messstrahls (42b) zur Entfernungsmessung parallel, insbesondere koaxial, zur ersten optischen Zielachse,
□ erste Winkelmessfunktionalität zur hochpräzisen Erfassung der Ausrichtung der ersten Zielachse, und
□ erste Auswertemitteln zur Datenspeicherung und Steuerung der Ausrichtung der ersten Anzieleinrichtung,
und wobei
● der erste Messstrahl (42b) auf den Reflektor (57), insbesondere fortlaufend, ausrichtbar ist, sodass die absolute Referenzpunktposition des Referenzpunkts (23,23a,23b) geodätisch genau bestimmbar und bereitstellbar ist.
und/oder
● die Referenzpunktbestimmungskomponente (10) mindestens eine Sendeeinheit zur Aussendung von Positionierungssignalen aufweist und
● die Referenzkomponente (100) derart ausgebildet ist, dass die Positionierungssignale, insbesondere mittels einer GNSS-Antenne, empfangbar sind und die Referenzpunktposition aus den Positionierungssignalen bestimmbar ist,
insbesondere wobei
die Sendeeinheit als GNSS-Sender, insbesondere GNSS-Satellit (11,11a,11b), insbesondere GPS-, GLONASS- oder Galileo-Satellit, ausgebildet ist und die Positionierungssignale durch GNSS-Signale verkörpert sind,
insbesondere wobei
● die Referenzpunktbestimmungskomponente (10) eine GNSS-Referenzstation zur Aussendung von GNSS-Korrektursignalen aufweist und
● die Referenzkomponente (100) derart ausgebildet ist, dass die GNSS-Korrektursignale empfangbar und die Referenzpunktposition aus den empfangenen GNSS-Signalen und den GNSS-Korrektursignalen bestimmbar ist.

4. Vermessungssystem (1) nach Anspruch 2 oder 3
**dadurch gekennzeichnet, dass**
das Vermessungssystem (1) eine Steuereinheit aufweist, wobei die Steuereinheit derart konfiguriert ist, dass eine räumliche geometrische Anordnung der Referenzpunkte (23,23a,23b), insbesondere automatisch, definierbar ist, insbesondere wobei die geometrische Anordnung der Referenzpunkte (23,23a,23b) in Abhängigkeit einer Optimierung zur Erzeugung der Paarung definierbar ist,
und/oder
die Steuereinheit derart konfiguriert ist, dass das Fluggerät (50) in Abhängigkeit der mittels der Referenzpunktbestimmungskomponente (10)), insbesondere fortlaufend, bestimmbaren Referenzpunktposition und/oder in Abhängigkeit der geometrischen Anordnung der Referenzpunkte (23,23a,23b), insbesondere automatisch, positionierbar ist,
und/oder
die Steuereinheit derart konfiguriert ist, dass eine Flugroute (25) definierbar ist und das Fluggerät (50) entlang der Flugroute (25) bewegbar ist, insbesondere wobei die Flugroute (25) in Abhängigkeit der räumlichen geometrischen Anordnung der Referenzpunkte (23,23a,23b) definierbar ist.

5. Vermessungssystem (1) nach einem der Ansprüche 1 bis 4 **dadurch gekennzeichnet, dass**
das Fluggerät (50) eine Sensoreinheit (54) zur Bestimmung der Ausrichtung des Fluggeräts (50) aufweist, insbesondere einen Neigungssensor, ein Magnetometer, einen Beschleunigungssensor, einen Drehratensensor und/oder ein Geschwindigkeitssensor, und/oder
das Vermessungssystem (1) eine Fernsteuereinheit aufweist, wobei die Fernsteuereinheit derart ausgebildet ist, dass eine Steuerung des Fluggeräts (50) und/oder eine Erzeugung der Paarung durchführbar ist, insbesondere wobei eine Kommunikation zwischen der Fernsteuereinheit und/oder der Referenzpunktbestimmungskomponente (10) und/oder der Neupunktbestimmungskomponente (30) und/oder der Referenzkomponente (100) kabelgebunden, mittels Funk-, Infrarot- oder Lasersignal durchführbar ist,
und/oder
die Referenzkomponente (100) derart ausgebildet ist, dass die Referenzpunktposition und/oder die relative Referenzinformation durch die Referenzkomponente (100) mittelbar bereitstellbar sind,
insbesondere wobei die Referenzkomponente (100) einen Sender zur Aussendung und/oder eine Empfangseinheit zum Empfang der Referenzpunktposition und/oder der relativen Referenzinformation aufweist, insbesondere wobei die Referenzpunktposition und/oder die relative Referenzinformation kabelgebunden, mittels Funk-, Infrarot- oder Lasersignal, übermittelbar sind, insbesondere wobei die Referenzpunktposition Positionierungssignalen (55) aufmodulierbar ist.

6. Vermessungssystem (1) nach einem der Ansprüche 1 bis 5 **dadurch gekennzeichnet, dass**
● die Referenzkomponente (100) den Reflektor (57) aufweist und die Neupunktbestimmungskomponente (30) aufweist
□ eine zweite Anzieleinrichtung (41), wobei die zweite Anzieleinrichtung (41) zur Änderung deren Ausrichtung gegenüber einer zweiten Basis der Neupunktbestimmungskomponente (30) motorisiert schwenkbar ist und zumindest aufweist
● eine eine zweite optische Zielachse definierende zweite Emissionseinheit und
● eine zweite Strahlungsquelle zur Emission eines zweiten optischen Messstrahls (42,42a) zur Entfernungsmessung parallel, insbesondere koaxial, zur zweiten optische Zielachse,
□ zweite Winkelmessfunktionalität zur hochpräzisen Erfassung der Ausrichtung der zweiten Zielachse und
□ zweite Auswertemittel zur Datenspeicherung und Steuerung der Ausrichtung der zweiten Anzieleinrichtung,
und wobei
der zweite Messstrahl (42,42a) auf den Reflektor (57), insbesondere fortlaufend, ausrichtbar ist, sodass die relative Referenzinformation, insbesondere zur Positions-Referenzierung der Neupunktbestimmungskomponente (30), in Abhängigkeit der Referenzpunktposition bestimmbar und bereitstellbar ist, sodass die Paarung und/oder die Neupunktposition (2,3) im absoluten Koordinatensystem, insbesondere eine Position eines anmessbaren Zielpunkts, bestimmbar sind
oder
● die Referenzkomponente (100) ein Pseudo-Satelliten-Modul (53) zur Aussendung der Positionierungssignale (55), insbesondere wobei die Positionierungssignale (55) die absolute Referenzpunktposition repräsentieren, aufweist und die Neupunktbestimmungskomponente (30) einen Pseudo-Satelliten-Empfänger (32,36) aufweist, wobei der Pseudo-Satelliten-Empfänger (32,36) derart ausgebildet ist, dass die von dem Pseudo-Satelliten-Modul (53) ausgesendeten Positionierungssignale (55) empfangbar und die relative Referenzinformation bestimmbar und bereitstellbar ist, sodass die Neupunktposition (2,3) im absoluten Koordinatensystem bestimmbar ist.

7. Geodätisches Referenzierungsverfahren mit
● mindestens einer einen Referenzpunkt (23,23a,23b) definierenden Referenzkomponente (100), wobei eine absoluten Position des Referenzpunkts bekannt ist und
● mindestens einer eine relative Neupunktposition (2,3) ableitenden Neupunktbestimmungskomponente (30), wobei eine gegenseitige relative Referenzinformation zwischen der Referenzkomponente (100) und der Neupunktbestimmungskomponente (30) abgeleitet wird, insbesondere zum Zwecke eines Referenzierens gegenüber der Referenzpunktposition,
**dadurch gekennzeichnet, dass**
durch die Referenzkomponente (100) der mindestens eine Referenzpunkt (23,23a,23b) als mobiler Referenzpunkt (23,23a,23b) bereitgestellt wird, wobei
● die Referenzkomponente (100) von einem auto-mobilen, unbemannten, steuerbaren Fluggerät (50) getragen wird und
● das Fluggerät (50) derart ausgebildet ist, dass die Referenzkomponente (100) durch das Fluggerät (50) räumlich frei versetzt, insbesondere im Wesentlichen positionsfest positioniert, wird.

8. Geodätisches Referenzierungsverfahren nach Anspruch 7 **dadurch gekennzeichnet, dass**
die absolute Referenzpunktposition in einem absoluten Koordinatensystem mit einer Referenzpunktbestimmungskomponente (10) bestimmt wird, und/oder
durch ein bestimmtes Positionieren der Referenzkomponente (100) eine
Sichtverbindung (90,91,92) zwischen der Referenzkomponente (100) und jeweils der Neupunktbestimmungskomponente (30) und der Referenzpunktbestimmungskomponente (10) mittelbar erzeugt wird und ein Referenzieren der Neupunktposition (2,3) im absoluten Koordinatensystem durchgeführt wird,
und/oder der mobile Referenzpunkt (23,23a,23b) durch das Fluggerät (50) räumlich versetzt wird, sodass eine Anzahl von Referenzpunkten (23,23a,23b) erzeugt wird, und das Fluggerät (50) in einem Höhenbereich von einem Meter bis 1000 Metern, insbesondere in einem Bereich von zwei Metern bis 50 Metern, versetzt und positioniert wird
und/oder
● ein Erfassen und Zuordnen
□ der absoluten durch die Referenzpunktbestimmungskomponente (10) bestimmten und bereitgestellten Referenzpunktposition des Referenzpunkts (23,23a,23b) und
□ der jeweiligen relativen Referenzinformation, insbesondere von gemessenen Winkeln und/oder einer Entfernungen zum jeweiligen
Referenzpunkt (23,23a,23b), wobei die relative Referenzinformation durch die Neupunktbestimmungskomponente (30) in Abhängigkeit der Referenzpunktposition und einer Position der Neupunktbestimmungskomponente (30)bestimmt und bereitgestellt wird, und
● ein Erzeugen einer Paarung aus dem Zuordnen der absoluten Referenzpunktposition und der jeweiligen relativen Referenzinformation erfolgt.

9. Geodätisches Referenzierungsverfahren nach Anspruch 7 oder 8
**dadurch gekennzeichnet, dass**
eine räumliche geometrische Anordnung der Referenzpunkte (23,23a,23b), insbesondere automatisch, definiert wird, insbesondere wobei die geometrische Anordnung der Referenzpunkte (23,23a,23b) in Abhängigkeit des Erzeugens der Paarung optimiert wird, und/oder
das Fluggerät (50) in Abhängigkeit der, insbesondere fortlaufend, bestimmbaren Referenzpunktposition und/oder in Abhängigkeit der geometrischen Anordnung der Referenzpunkte (23,23a,23b), insbesondere automatisch, positioniert wird,
und/oder
eine Flugroute (25) definiert wird und das Fluggerät (50) entlang der Flugroute (25) bewegt wird, insbesondere wobei die Flugroute (25) in Abhängigkeit der räumlichen geometrischen Anordnung der Referenzpunkte (23,23a,23b) definiert wird.

10. Geodätisches Referenzierungsverfahren nach Anspruch 8 oder 9
**dadurch gekennzeichnet, dass**
im Rahmen des Verfahrens von der Referenzpunktbestimmungskomponente (10) bereitgestellte Positionierungssignale von der Referenzkomponente (100) empfangen werden, insbesondere von GNSS-Satelliten (11) bereitgestellte GNSS-Signale, insbesondere wobei die GNSS-Signale repräsentiert werden durch GPS-, GLONASS- oder Galileo-Signale, und die Referenzpunktposition aus den empfangenen Positionierungssignalen bestimmt und bereitgestellt wird,
und/oder
das Bestimmen und Bereitstellen der Referenzpunktposition mittels eines an der Referenzkomponente (100) reflektierten von der Referenzpunktbestimmungskomponente (10) emittierten ersten Messstrahls (42b) erfolgt,
und/oder
ein Bestimmen einer Ausrichtung des Fluggeräts (50) in Nick-, Roll- und Gierrichtung erfolgt, insbesondere wobei das Bestimmen der Ausrichtung mittels einer internen, dem Fluggerät (50) zugeordneten Sensoreinheit (54), insbesondere mittels Neigungssensor, Magnetometer, Beschleunigungssensor, Drehratensensor und/oder Geschwindigkeitssensor, erfolgt.

11. Geodätisches Referenzierungsverfahren nach einem der Ansprüche 8 bis 10
**dadurch gekennzeichnet, dass**
● im Rahmen des Verfahrens von der Referenzkomponente (100) die Positionierungssignale (55), insbesondere die Referenzpunktposition repräsentierende Pseudo-Satelliten-Signale (55), ausgesendet werden und die Positionierungssignale (55) von Neupunktbestimmungskomponente (30) empfangen und in Abhängigkeit der Referenzpunktposition die relative Referenzinformation bestimmt wird, sodass die Neupunktposition (2,3) im absoluten Koordinatensystem bestimmt wird.
oder
● das Bestimmen der relativen Referenzinformation mittels eines von der Neupunktbestimmungskomponente (30)emittierten und an der Referenzkomponente (100) reflektierten zweiten Messstrahls (42,42a) erfolgt, sodass die Paarung und/oder die Neupunktposition (2,3)im absoluten Koordinatensystem, insbesondere eine Position eines angemessenen Zielpunkts, bestimmt werden.

12. Auto-mobiles, unbemanntes, steuerbares Fluggerät (50), insbesondere Drohne, für ein Vermessungssystem (1) nach einem der Ansprüche 1 bis 6, wobei das Fluggerät (50) räumlich frei versetzbar, insbesondere im Wesentlichen positionsfest positionierbar, ist,
**dadurch gekennzeichnet, dass**
das Fluggerät (50) eine Referenzkomponente (100) zur Bereitstellung eines mobilen
Referenzpunkts (23,23a,23b) trägt.

13. Fluggerät (50) nach Anspruch 12 für ein Vermessungssystem (1) nach einem der Ansprüche 1 bis 6, **dadurch gekennzeichnet, dass**
● Steuerungsdaten zur Steuerung des Fluggeräts (50) empfangbar sind und/oder
● die Steuerungsdaten zur Steuerung des Fluggeräts (50) durch eine Verarbeitungseinheit aus empfangbaren Referenzinformationen zur Bestimmung einer absoluten Referenzpunktposition ableitbar sind, insbesondere wobei eine Fluggerätsausrichtung durch eine dem Fluggerät (50) zugeordnete Sensoreinheit (54) bestimmbar ist, insbesondere wobei die absolute Referenzpunktposition und die relative Referenzinformation durch die Verarbeitungseinheit verknüpfbar sind, sodass eine Paarung erzeugbar ist und/oder
das Fluggerät (50) derart ausgebildet ist, dass
● der mobile Referenzpunkt (23,23a,23b) durch das Fluggerät (50) räumlich versetzbar, insbesondere im Wesentlichen positionsfest positionierbar, ist, sodass eine Anzahl von Referenzpunkten (23,23a,23b) und Paarungen erzeugbar ist, und
● das Fluggerät (50) in einem Höhenbereich von einem Meter bis 1000 Metern, insbesondere in einem Bereich von zwei Metern bis 50 Metern, versetzbar und positionierbar ist
und/oder
die Referenzkomponente (100) ein Pseudo-Satelliten-Modul (53) zur Aussendung von
Positionierungssignale (55) zur Bestimmung der relativen Referenzinformation, insbesondere zur Bestimmung einer Neupunktposition (2,3) in einem absoluten Koordinatensystem , aufweist,
und/oder
die Referenzkomponente (100) einen Reflektor (57) zur Bestimmung der relativen Referenzinformation, insbesondere durch eine Anzielung des Reflektors (57) mit einem Laserstrahl, aufweist, sodass die Paarungen und/oder die Neupunktposition (2,3) im absoluten Koordinatensystem, insbesondere eine Position eines anmessbaren Zielpunktes, bestimmbar sind.

14. Verwendung eines unbemannten, steuerbaren, auto-mobilen Fluggeräts (1) zum Tragen einer
Referenzkomponente (100) für ein Vermessungssystem (1) nach einem der Ansprüche 1 bis 6.

15. Computerprogrammprodukt, das auf einem
maschinenlesbaren Träger gespeichert ist, oder Computer-Daten-Signal, verkörpert durch eine elektromagnetische Welle, mit Programmcode zur Durchführung des Verfahrens nach einem der Ansprüche 7 bis 11, insbesondere wenn das Programm in einer elektronischen Datenverarbeitungseinheit ausgeführt wird.
